# EUROPÄISCHE PATENTSCHRIFT

(11) **EP 2 728 714 B1**
(45) Veröffentlichungstag und Bekanntmachung des Hinweises auf die Patenterteilung: **25.03.2020**
(21) Anmeldenummer: 14150367.2
(22) Anmeldetag: 17.09.2010
(51) Int. Cl.: H02K 3/50, H02K 11/04

(54) **Elektrische Maschine**
Electric machine
Machine électrique

(30) Priorität: 17.09.2009 DE 102009042563
(43) Veröffentlichungstag der Anmeldung: 07.05.2014
(62) Teilanmeldung aus: 10757066.5
(73) Patentinhaber: SEG Automotive Germany GmbH, 70499 Stuttgart (DE)
(72) Erfinder: Sekertzis, Vassilios, 70439 Stuttgart (DE); Rivera-Schlottbohm, Gianna, 44139 Dortmund (DE)
(74) Vertreter: Steinbauer, Florian

(56) Entgegenhaltungen:
- WO-A1-2005/064769
- DE-A1- 19 956 699
- DE-A1-102004 063 850
- US-A1- 2009 033 181

## Beschreibung

### Stand der Technik

Aus der EP 960464 B1 ist eine elektrische Maschine, ausgebildet als Wechselstromgenerator, mit einer Gleichrichtereinrichtung bekannt.

### Offenbarung der Erfindung

Mit der vorgeschlagenen elektrischen Maschine gemäß dem Anspruch 1 wird eine möglichst kompakte Ausführung der elektrischen Maschine angestrebt. Dies ist besonders dadurch möglich, in dem der Führungsstutzen der Gleichrichtereinrichtung zwischen dem Lagerschild und dem Regler in Richtung der in dem Führungsstutzen angeordneten Leiterenden kürzer als andere Führungsstutzen ist. Um einerseits eine gute Anbindung des Reglers am Lagerschild zu erhalten und andererseits die erwähnte möglichst kompakte Ausführung zu erhalten, umgreift ein Arm, der den kürzeren Führungsstutzen mit den anderen Führungsstutzen einstückig verbindet, einen Befestigungstutzen, an dem der Regler befestigt ist von radial innen. Der Arm verläuft somit bogenförmig an der radial inneren Seite des Befestigungstutzens um diesen herum. Um einerseits möglichst kompakt zu bauen und andererseits die für die Kühlung wichtige Strömung nicht zu behindern, ist ein dem kurzen Führungsstutzen direkt zugeordneter Anschlusskontakt Leiter in Gestalt eines Umfangsbogens abschnittsweise in Richtung der Drehachse unter einem Außenrand mindestens einer Aufnahme und dazu vorzugsweise zwischen dem Lagerschild und dem Kühlkörper angeordnet. Um einen elektrisch ausreichend isolierenden Abstand zwischen Diodenkopfdrähten und dem Umfangsbogen zu erhalten, weist der Umfangsbogen mehrere Knickstellen auf, wobei einige dieser Knickstellen an einer gleichen Umfangsposition wie Anschlusskontakte angeordnet sind. Damit der Umfangsbogen nicht unter einem Regler angeordnet sein muss und dadurch mehr als erforderlich Platz und Raum benötigt wird, ist der Umfangsbogen in Bezug zur Drehachse über ein Winkelmaß erstreckt, das größer ist als ein Winkel, über den sich die Stromgleichrichter insgesamt in den Kühlkörpern erstrecken. Der Umfangsbogen wird schwingungsarm gelagert und damit vor Schwingungsbrüchen geschützt, indem der Umfangsbogen an den Führungsstutzen mittels einstückig angeformter Ösen abgestützt ist. Um wiederum raumsparend zu sein, weist die im Stator bzw. im Ständereisen angeordnete Ständerwicklung Leiterenden auf, die unterschiedlich lang und vorzugsweise an die unterschiedlich großen bzw. kurzen Führungsstutzen angepasst sind.

### Kurze Beschreibung der Figuren

Es zeigen die
Figur 1 einen Längsschnitt durch eine elektrische Maschine,
Figur 2 eine Draufsicht auf einen Kühlkörper einer Kühleinrichtung einer Gleichrichtereinrichtung nach einem ersten Ausführungsbeispiel,
Figur 3 eine Untersicht des Kühlkörpers aus Figur 2,
Figur 4 eine räumliche Ansicht des Kühlkörpers aus Figur 2,
Figur 5a und
Figur 5b je eine Detailansicht einer Variante des Kühlkörpers aus Figur 2,
Figur 6 eine Ansicht eines weiteren Kühlkörpers der Kühleinrichtung der Gleichrichtereinrichtung,
Figur 7 eine weitere Ansicht des Kühlkörpers aus Figur 6,
Figur 8 eine Draufsicht auf die Kühleinrichtung und die Gleichrichtereinrichtung,
Figur 9 eine Untersicht der Kühleinrichtung und der Gleichrichtereinrichtung aus Figur 8,
Figur 10 eine räumliche Ansicht des Gegenstands aus Figur 8,
Figur 11 eine ausschnittweise Seitenansicht auf die montierte Gleichrichtereinrichtung,
Figur 12 eine Seitenansicht auf die Gleichrichtereinrichtung,
Figur 13 eine Draufsicht auf einen Kühlkörper einer Kühleinrichtung einer Gleichrichtereinrichtung nach einem zweiten Ausführungsbeispiel,
Figur 14a und
Figur 14b eine räumliche Ansicht eines weiteren Kühlkörpers der Kühleinrichtung einer Gleichrichtereinrichtung nach einem zweiten Ausführungsbeispiel sowie eine ausschnittweise Seitenansicht,
Figur 15 eine Draufsicht auf die Kühleinrichtung und die Gleichrichtereinrichtung nach dem zweiten Ausführungsbeispiel,
Figur 16 eine Untersicht auf die Kühleinrichtung aus Figur 15,
Figur 17a und
Figur 17b eine Seiten- und eine Draufsicht auf einen Führungsstutzen nach beiden Ausführungsbeispielen,
Figur 18 eine prinzipielle Schnittansicht durch den Schichtenaufbau nach beiden Ausführungsbeispielen,
Figur 19 eine Seitenansicht auf die Gleichrichtereinrichtung nach dem zweiten Ausführungsbeispiel,
Figur 20 eine räumliche Ansicht auf ein Lagerschild,
Figur 21 eine Schnittdarstellung durch ein Podest nach beiden Ausführungsbeispielen,
Figur 22 einen Ständer in einer Seitenansicht.

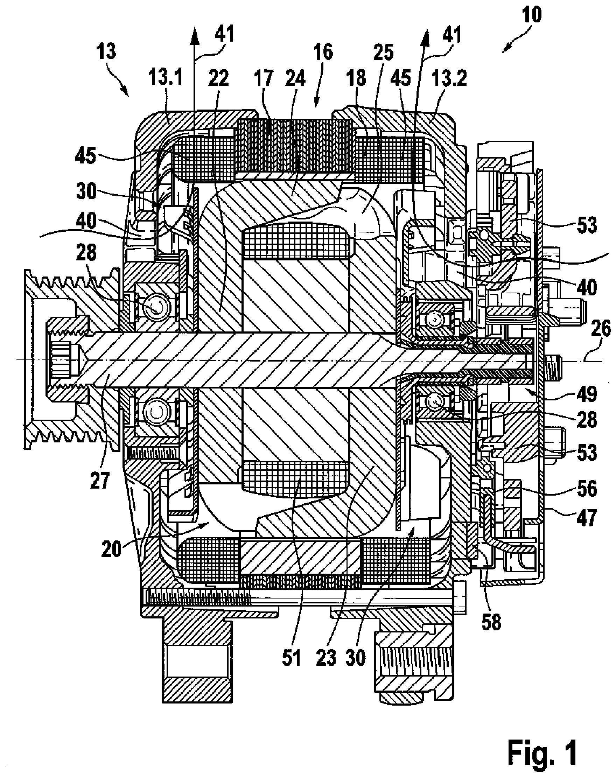

In Figur 1 ist ein Querschnitt durch eine elektrische Maschine 10, hier in der Ausführung als Generator bzw. Wechsel-, insbesondere Drehstromgenerator für Kraftfahrzeuge, dargestellt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichteten, sich axial erstreckenden Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u. a. aus zwei Klauenpolplatinen 22 und 23, an deren Außenumfang jeweils sich in axialer Richtung erstreckende Klauenpolfinger 24 und 25 angeordnet sind. Die axiale Richtung ist hierbei durch eine Drehachse 26 des Rotors 20 bestimmt. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft 41 als Kühlmittel in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein erster Kühlkörper 53 angeordnet, der hier als Pluskühlkörper wirkt. Als sogenannter Minuskühlkörper wirkt ein weiterer Kühlkörper, der in dieser verschiedentlich schematischen Figur nicht zu erkennen ist. Zwischen dem Lagerschild 13.2 und dem Kühlkörper 53 ist eine Anschlussplatte 56 angeordnet, die dazu dient, die im Minuskühlkörper angeordneten Minusdioden 58 und hier in dieser Darstellung nicht gezeigte Plusdioden im Kühlkörper 53 miteinander zu verbinden und somit eine an sich bekannte Brückenschaltung darzustellen.

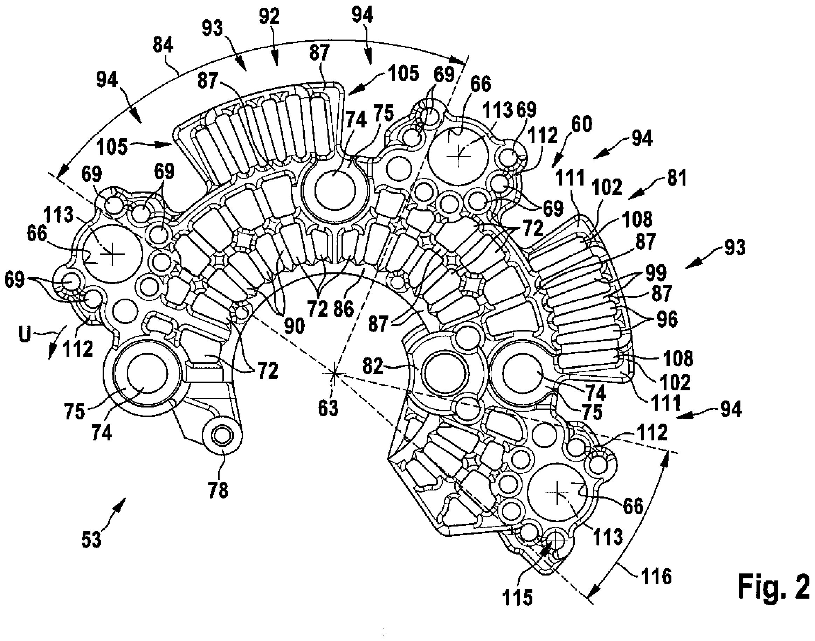

In Figur 2 ist ein erster Kühlkörper 53 abgebildet. Dieser Kühlkörper 53 weist einen bogenförmigen Körperbereich 60 auf. Dieser bogenförmige Körperbereich 60 weist eine zentrale Mitte 63 auf. Sie deckt sich im an das Gehäuse 13.2 montierten Zustand mit der Drehachse 26. Der Kühlkörper 53 hat drei Aufnahmen 66, die dazu dienen, jeweils einen Stromgleichrichter aufzunehmen. Der Stromgleichrichter ist hier beispielsweise eine Plusdiode. Die Aufnahmen 66 haben hier die Gestalt eines Loches, in die später beispielsweise sogenannte Einpressdioden (Plusdioden) eingedrückt werden. Alternativ kann beispielsweise auch eine Vertiefung in der Oberfläche des ersten Kühlkörpers 53 vorgesehen sein, um in der Vertiefung eine Diode durch Löten zu befestigen. Statt in einer Vertiefung kann eine Diode auch an einem vorgesehenen Ort in der Ebene aufgelötet werden. Darüber hinaus weist der Kühlkörper 53 etliche Öffnungen auf, die zur Durchströmung des im Betrieb heißen Kühlkörpers 53 mit Kühlmittel dienen. Um eine Aufnahme 66 herum, sind bogenartig aneinandergereiht erste Öffnungen 69 angeordnet. Diese ersten Öffnungen 69 sind in Umfangsrichtung U beiderseits einer Aufnahme 66, d. h. bspw. von der Mitte 63 aus gesehen rechts und links, angeordnet. Zwischen den Aufnahmen 66 und der zentralen Mitte 63 ist in Richtung zur zentralen Mitte 63 zumindest eine länglich geformte zweite Öffnung 72 angeordnet, wobei die zweite Öffnung 72 mit ihrer länglichen Form zumindest im Wesentlichen auf die zentrale Mitte 63 ausgerichtet ist. In weiterer Näherung kann auch festgestellt werden, dass zwischen den Aufnahmen 66 mit den ersten Öffnungen 69 und der zentralen Mitte 63 in Richtung zur zentralen Mitte 63 mehrere länglich geformte zweite Öffnungen 72 angeordnet sind, wobei die zweiten Öffnungen 72 mit ihrer länglichen Form zumindest im Wesentlichen auf die zentrale Mitte 63 ausgerichtet sind. Länglich bedeutet, dass sich die Öffnungen 72 in radialer Richtung länger als in Umfangsrichtung erstrecken.

In dem Körperbereich 60 sind weiters drei zylindrische mit je einem Loch 74 versehene Senkbereiche 75 vorgesehen. Dort ist die Materialstärke des Kühlkörpers 53 auf ca. 40% dessen reduziert, die bei den Aufnahmen 66 vorgesehen ist. Diese Senkbereiche dienen bei der Montage zur Befestigung der Gleichrichtereinrichtung an die äußere Seite des Lagerschilds 13.2. Eine Gewindehülse 78 dient zur Befestigung und Kontaktherstellung mit einem weiteren Bauteil der Gleichrichtereinrichtung. Ein Einsetzdom 82 dient zur späteren Aufnahme und Befestigung eines sogenannten B+-Bolzens (B-Plus-Bolzen), an dem ein Ladekabel befestigt wird, um einer Fahrzeugbatterie elektrischen Strom zuführen zu können.

Wie bereits erwähnt, sind vorzugsweise mehrere Aufnahmen 66 vorhanden, die am Umfang 81, d. h. vorzugsweise am bzw. im Bereich des Außenumfangs, des Kühlkörpers 53 voneinander beabstandet angeordnet sind. Am Außenumfang bedeutet hauptsächlich in der radial äußeren Hälfte

Aus Figur 2 ist zu entnehmen, dass in einem Segment 84 zwischen zwei Aufnahmen 66 ein vorzugsweise einstückig angeformter Überhang 92 des Kühlkörpers 53 angeordnet ist, der hier im Beispiel mit mehreren länglich geformten zweite Öffnungen 72 ausgeführt ist, die sich zwischen zwei bogenförmig erstreckenden Holmen 87 erstrecken. Der Überhang 92 ist beiderseits in Umfangsrichtung U durch große buchtförmige Aussparungen 94 von den Aufnahmen 66 und deren ersten Öffnungen 69 getrennt bzw. beabstandet. Ein radial inneres Ende der buchtförmigen Aussparungen 94 ist von der zentralen Mitte 63 weniger weit entfernt als ein Zentrum 113 einer Aufnahme 66. Die zweiten Öffnungen 72 zwischen zwei bogenförmigen Holmen 87 sind durch Stege 90 getrennt. Die Stege 90 erstrecken sich vorzugsweise radial. Die beiden Holme 87 verlaufen zumindest in etwa kreisbogenförmig.

Im Segment 84 zwischen zwei Aufnahmen 66 erstreckt sich von dem äußeren der beiden eben erwähnten Holme 87 nach radial außen ein leiterartiges Kühlsegment 93, als Ausführungsbeispiel eines Überhangs 92, welches mit dem einen Holm 87 einstückig verbunden ist. Dieses leiterartige Kühlsegment 93 weist ebenso längliche Kühlluftöffnungen 96 auf, die durch Stege 99 voneinander getrennt sind. Nach radial außen hin sind diese Kühlluftöffnungen 96 durch einen Holm 102 begrenzt. In Umfangsrichtung U weist das Kühlsegment 93 zu dessen seitlichen Rand 105 hin zumindest eine Öffnung 108 auf, deren Umrandung 111 teilweise eine geringere Materialstärke als andere Öffnungen 96 des leiterartigen Kühlsegments 93 hat. Insbesondere ist vorgesehen, dass der eine Aussparung 94 begrenzende seitliche Teil der Umrandung 111 und ggf. der radial äußere der seitlichen Öffnungen 108 eine geringere Materialstärke aufweist.

Zwischen den Aufnahmen 66 auf ca. ein-Uhr- und vier-Uhr-Position (Figur 2) befindet sich ebenfalls ein Kühlsegment 93, das analog zu dem eben beschriebenen Kühlsegment 93 gestaltet ist.

Um die Aufnahmen 66 herum sind die Öffnungen 69 angeordnet. Zur Verbesserung des Zugriffs zu nachfolgend gezeigten Anschlusskontakten, die in der Gleichrichtereinrichtung neben den Öffnungen 69 positioniert werden, ist vorgesehen, Umrandungen 112 der Öffnungen 69 auf der Seite der Öffnungen 69, die einem Zentrum 113 einer Aufnahme 66 abgewandt sind, in ihrer Materialstärke in Achsrichtung (Drehachse 26) bzw. in Richtung einer Profilachse 115 weniger stark auszuführen, als dies zwischen den Aufnahmen 66 und den Öffnungen 69 der Fall ist. Aus dem gleichen Grund weisen die seitlichen Öffnungen 108 eine geringere Materialstärke auf. Die Profilachse 115 erstreckt sich längs dem Profil bzw. Durchgangsprofil einer Öffnung 69.

An die beiden äußeren Holme 87 schließen in einer weiteren Reihe und durch einen weiteren Holm 86 nach radial innen begrenzt nach radial innen weitere länglich geformte Öffnungen 72 an.

Die Aufnahme 66, die ersten Öffnungen 69 und die zumindest eine länglich geformte zweite Öffnung 72 sind in einem Sektor 116 ausgehend von der zentralen Mitte (63) befindlich, wobei der Sektor 116 eine Winkelbreite zwischen 25° und 40° aufweist (alle Ausführungsbeispiele).

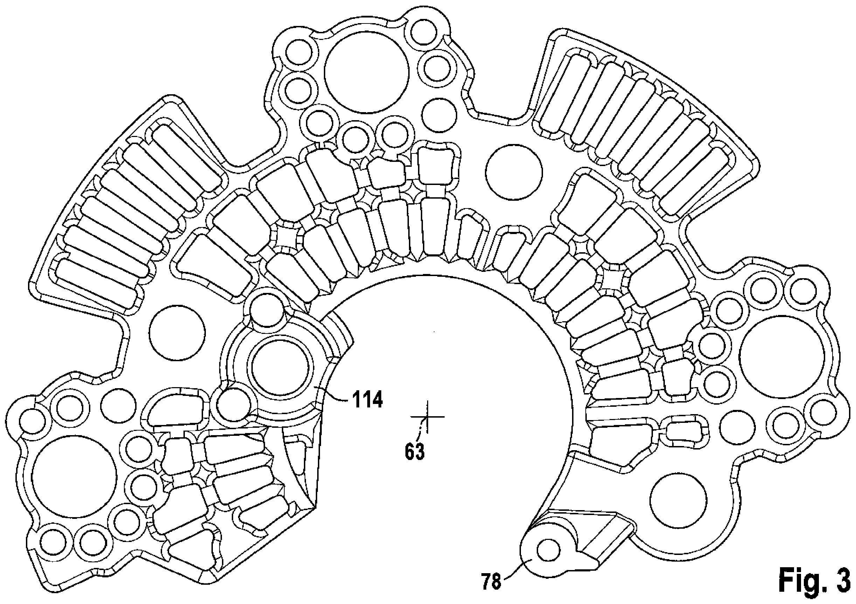

In Figur 3 ist die in Figur 2 nicht erkennbare Rückseite des Kühlkörpers 53 dargestellt. Beide Seiten sind bereichsweise zueinander im Wesentlichen parallel. In eine Vertiefung 114 wird später ein B+-Bolzen mit seinem Rundkopf so durchgesteckt, das der Rundkopf in der Vertiefung 114 Platz findet und ein Schraubgewinde von der in Figur 2 erkennbaren Seite sichtbar ist.

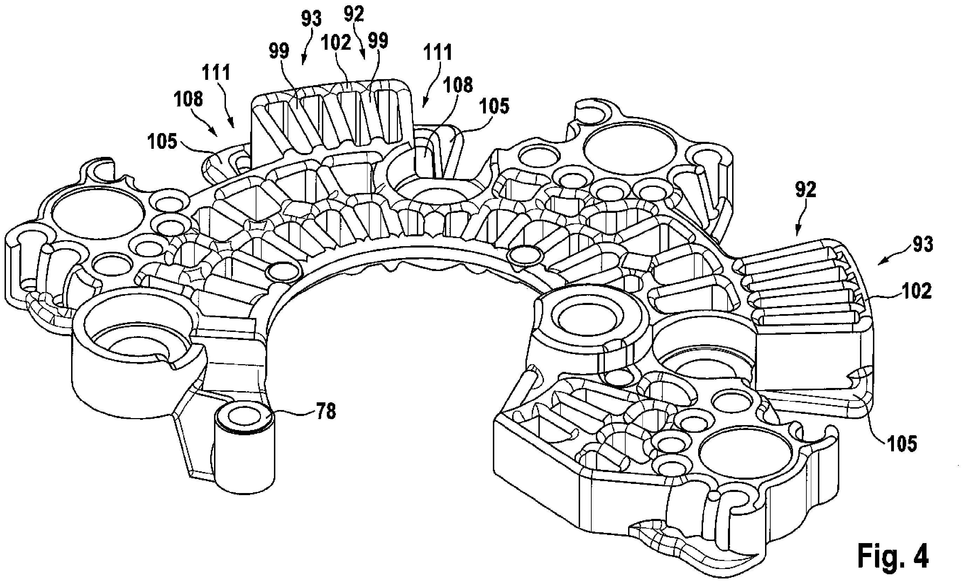

Figur 4 zeigt den Kühlkörper 53 in einer räumlichen Ansicht von der in Figur 2 dargestellten Seite. Hier sind die Überhänge 92 bzw. leiterartigen Kühlsegmente 93 gut zu erkennen. Ganz besonders gilt dies für die Öffnungen 108 und deren seitlichen Rand 105, deren Umrandung 111 teilweise eine geringere Materialstärke als andere Öffnungen 96 des Überhangs 92 bzw. des leiterartigen Kühlsegments 93 hat.

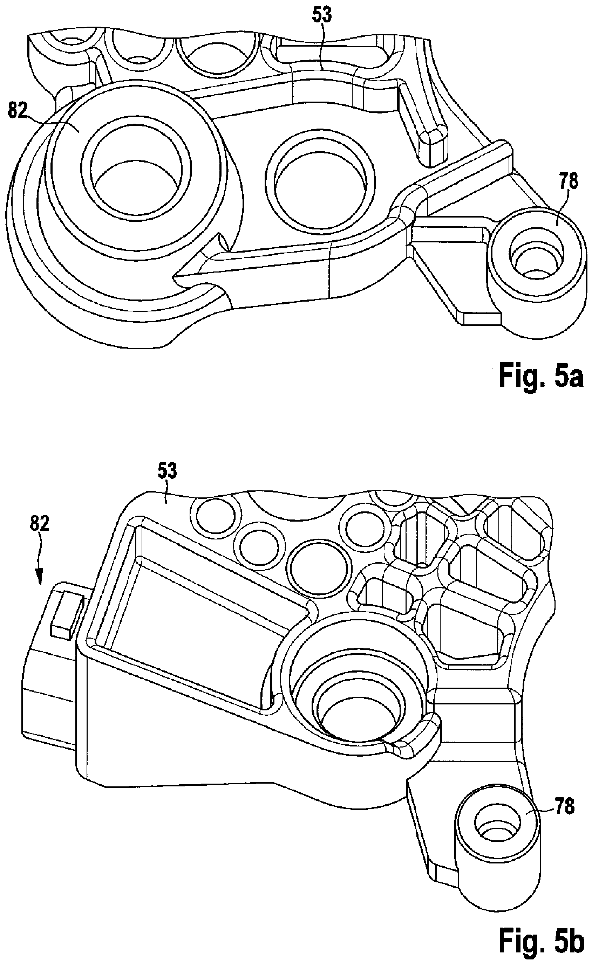

Die Figuren 5a und 5b zeigen verschiedene Details und damit auch Alternativen zur Befestigung eines B+-Bolzens. In Figur 5a ist in Bezug zur Darstellung in Figur 2 neben dem an der Position "9-Uhr" befindlichen Senkbereich 75 ein alternativer oder zusätzlicher Einsatzdom 82 vorgesehen, in den ein zusätzlicher oder alternativer B+-Bolzen eingesetzt werden kann. In Figur 5b ist in abgewinkelter Weise ein Einsatzdom 82 vorgesehen. Auf der Unterseite des Kühlkörpers 53 kann von rechts in den Einsatzdom 82 ein B+-Bolzen eingesetzt werden.

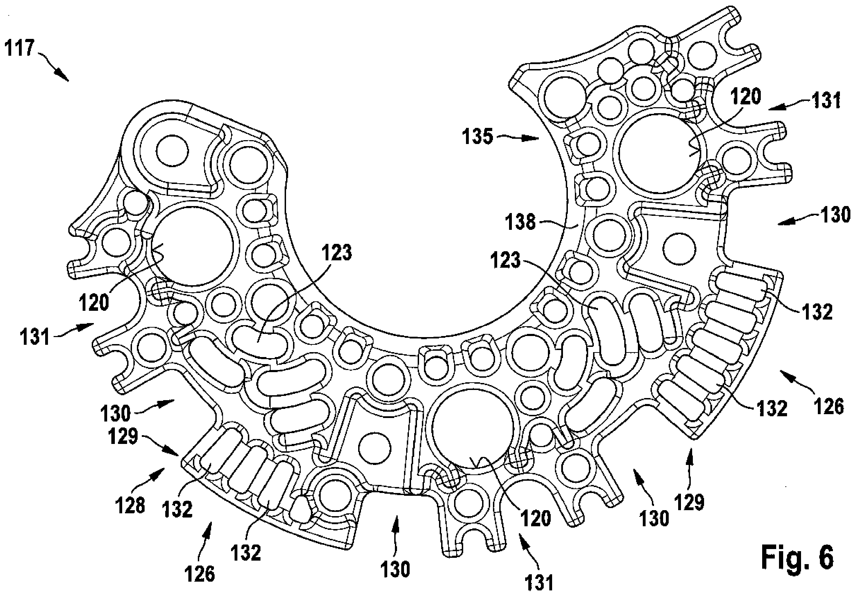

In Figur 6 ist ein weiterer Kühlkörper 117 abgebildet. Der Kühlkörper 117 hat drei Aufnahmen 120, die dazu dienen, jeweils einen Stromgleichrichter aufzunehmen. Der Stromgleichrichter ist hier beispielsweise eine Minusdiode. Die Aufnahmen 120 haben hier die Gestalt eines Loches, in die später beispielsweise sogenannte Einpressdioden (Minusdioden) eingedrückt werden. Alternativ kann beispielsweise auch eine Vertiefung in der Oberfläche des weiteren Kühlkörpers 117 vorgesehen sein. Darüber hinaus weist der Kühlkörper 120 etliche Öffnungen 123 auf, die zur Durchströmung des im Betrieb heißen Kühlkörpers 120 mit Kühlmittel dienen.

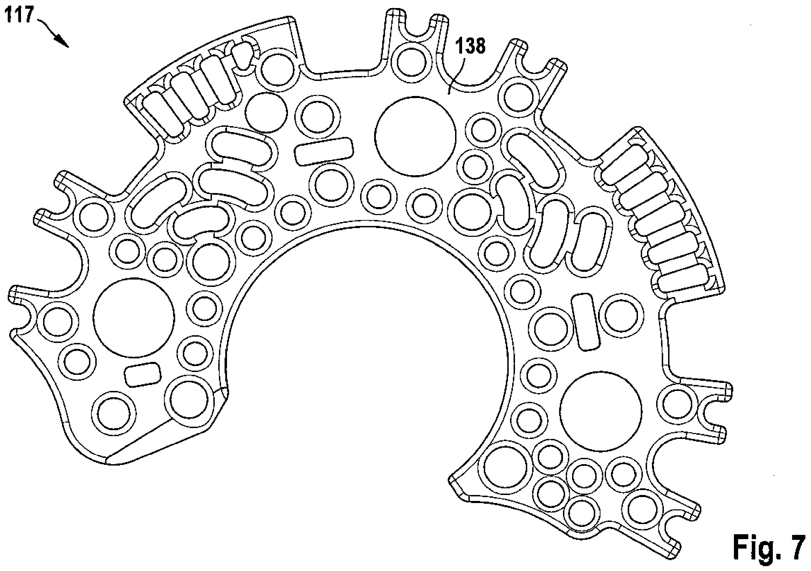

An zumindest einer Umfangsstelle 126 befindet sich auch hier ein vorzugsweise einstückig angeformter Überhang 127 in Gestalt eines leiterartigen Kühlsegments 129. Dieses leiterartige Kühlsegment 129 hat Öffnungen 132, die sich länglich nach radial außen erstrecken. Das Kühlsegment 129 erstreckt sich über einen definierten Umfangsbereich jeweils zwischen zwei Aufnahmen 120. Am Innenumfang 135 ist der Kühlkörper 117 abgeschrägt, Abschrägung 138. Wie in Figur 7 erkennbar ist, ist die später zum ersten Kühlkörper 53 gerichtete Oberfläche 138 im Wesentlichen eben. Eine Außenkontur 128 des weiteren Kühlkörpers 117 weist beiderseits des Überhangs 127 je eine buchtförmige Aussparung 130 bspw. unmittelbar daneben auf. Diese buchtförmigen Aussparungen 130 sind wiederum in Umfangsrichtung betrachtet jeweils zwischen dem Überhang 127 und je einer weiteren Aussparung 131 befindlich. In Richtung der vorgesehenen Drehachse 26 kann des Weiteren festgestellt werden, dass sich der Überhang 127, die Aussparung 130 und die Aussparung 131 jeweils in Bezug zur Drehachse 26 auf einem gleichen Radius befinden.

Beim Zusammenbau der Kühleinrichtung ist vorgesehen, dass die beiden Kühlkörper 53 und 117 durch- und zwischenströmbar mit Abstand übereinander geschichtet sind und das leiterartige Kühlsegment 129 des weiteren Kühlkörpers 117 über dem leiterartigen Kühlsegment 93 des ersten Kühlkörpers 53 angeordnet ist. Es ist dem entsprechend eine Kühleinrichtung 141 offenbart, wobei diese einen weiteren Löcher 123 aufweisenden Kühlkörper 117 hat, der im Wesentlichen ringsegmentförmig ist, wobei sich an zumindest einer Umfangsstelle 126 ein leiterartiges Kühlsegment 129 befindet, wobei die beiden Kühlkörper 53, 117 durch- und zwischenströmbar mit Abstand übereinander geschichtet sind und das leiterartige Kühlsegment 129 des weiteren Kühlkörpers 117 über dem leiterartigen Kühlsegment 93 des ersten Kühlkörpers 53 angeordnet ist.

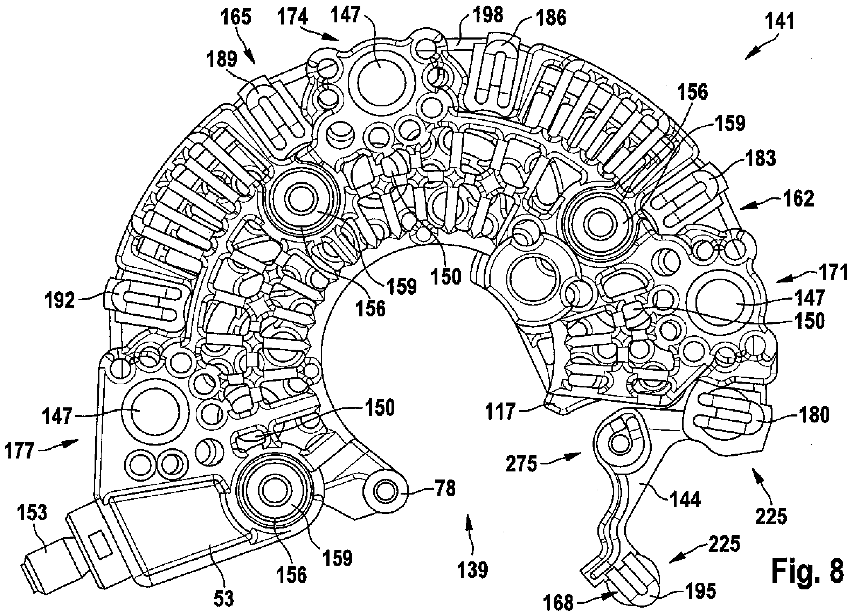

Figur 8 zeigt die zur Gleichrichtereinrichtung 139 zusammengebaute Kühleinrichtung 141 aus erstem Kühlkörper 53 (Pluskühlkörper), zweitem Kühlkörper 117 (Minuskühlkörper), der Verschaltungseinheit 144, positiven Stromgleichrichtern 147 (Plusdioden), negativen Stromgleichrichtern 150 (Minusdioden), B+-Bolzen 153, Isolationshülsen 156 und Nieten 159 (Rohrnieten). Des Weiteren sind hier nicht erkennbare Distanzstücke verwendet. Die Ansicht auf die Kühleinrichtung 141 entspricht in Bezug zur Figur 1 bei abgenommener Schutzkappe 47 der Ansicht von rechts in Richtung der Drehachse 26.

Die Verschaltungseinheit 144 weist in bekannter Weise mehrere Leiterabschnitte 162, 165 und 168 auf, die dazu dienen, je ein Paar 171, 174 und 177 aus je einem positiven Stromgleichrichter 147 (Plusdiode) und je einem negativen Stromgleichrichter 150 miteinander so zu verschalten, dass die an den Anschlusskontakten 180, 183, 186, 189, 192 und 195 (über den Umfangsbogen 198) angeschlossenen Ständerwicklungen und die von ihnen gelieferte Wechselspannung gleichgerichtet wird. Die Anschlusskontakte 180 und 183 sind mit dem Paar 171, die Anschlusskontakte 186 und 189 sind mit dem Paar 174 und die Anschlusskontakte 192 und 195 (über den Umfangsbogen 198) sind mit dem Paar 177 verbunden.

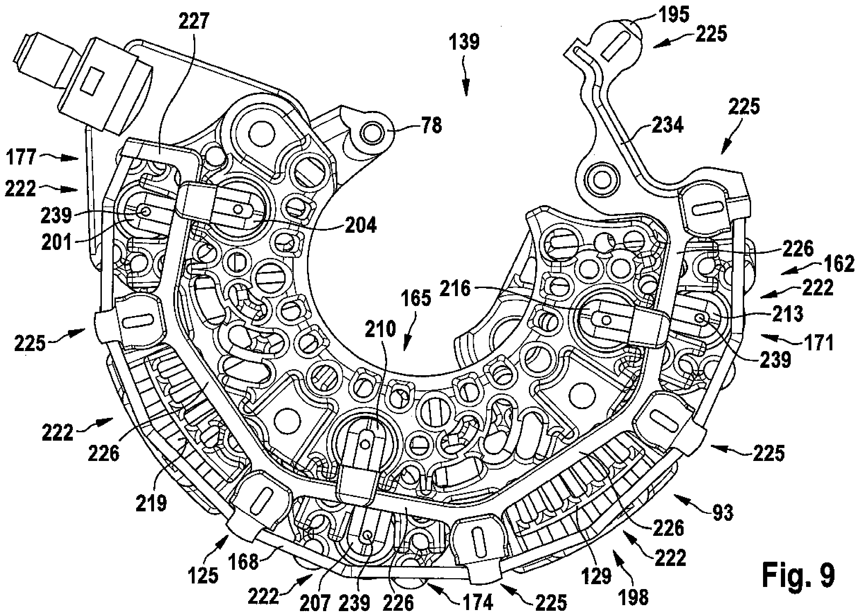

Figur 9 zeigt die zusammengebaute Kühleinrichtung 141 von der anderen, in Figur 8 nicht gezeigten Seite. Von dieser Seite sind Anschlusskontakte 201 und 204, Anschlusskontakte 207 und 210 und Anschlusskontakte 213 und 216 erkennbar, die je ein Paar 171, 174 und 177 aus je einem positiven Stromgleichrichter 147 (Plusdiode) und je einem negativen Stromgleichrichter 150 miteinander verschalten. Diese Verschaltung entspricht einer üblichen Brückengleichrichterschaltung. Die positiven Stromgleichrichter 147 (Plusdioden), Einpressdioden wie auch die negativen Stromgleichrichter 150 (Minusdioden), sind mit dem ersten Kühlkörper 53 elektrisch leitfähig verbunden, so dass über die Stromgleichrichter 150 am B+-Bolzen 153 im Betriebsfall (eingeschalteter Zustand, Erregerstrom, drehender Rotor 20) eine positive Spannung anliegt.

Der Löcher 123 aufweisende Kühlkörper 117 ist im Wesentlichen ringsegmentförmig, wobei sich an zumindest einer Umfangsstelle 126 ein Überhang 127 bzw. leiterartiges Kühlsegment 129 befindet, wobei die beiden Kühlkörper 53 und 117 durch- und zwischenströmbar mit Abstand übereinander geschichtet sind und das leiterartige Kühlsegment 129 des weiteren Kühlkörpers 117 über dem leiterartigen Kühlsegment 93 des ersten Kühlkörpers 53 angeordnet ist. Ein größter Außendurchmesser des Überhangs 127 bzw. Kühlsegments 129 ist kleiner als ein Außendurchmesser des Überhangs 92 des Kühlsegments 93. Der Umfangsbogen 198 befindet sich in Bezug zur Drehachse 26 an der gleichen axialen Position wie ein Außenrand 219 und in Bezug zu Figur 9 über dem Überhang 92. Wie aus Figur 9 erkennbar ist, weist der Umfangsbogen 198 des Leiterabschnittes 168 mehrere Knickstellen 222 auf. Einige dieser Knickstellen 222 sind an einer gleichen Umfangsposition wie Anschlusskontakte 201, 207 und 213. Die Knickstellen 222 führen dazu, dass ein hier nicht näher bezeichneter Abstand zwischen einer Knickstelle 222 und einem Anschlusskontakt 201, 207 und 213 größer ist, als wenn an der Position der Knickstelle 222 ein einfacher Kreisbogen vorgesehen wäre. Ein an der Knickstelle 222 bestimmter Knickwinkel ist so angeordnet, dass sich der Knickwinkel auf der radialen Innenseite des Umfangsbogens befindet. Der zum Knickwinkel komplementäre Außenwinkel ist größer als der Knickwinkel. Der Umfangsbogen 198 erstreckt sich in Bezug zum Mittelpunkt (Drehachse 26) über ein Winkelmaß, das größer ist als der Winkel, über den sich die Stromgleichrichter 147 und 150 insgesamt im Kühlkörper 53 und 117 erstrecken. Anders ausgedrückt, erstreckt sich der Umfangsbogen 198 in Bezug zum Mittelpunkt (Drehachse 26) über ca. 225° des Umfangs. Der Umfangsbogen 198 ist an den Führungsstutzen 225 mittels einstückig angeformter Ösen 223 abgestützt.
In einer Seitenansicht lässt sich die Gleichrichtereinrichtung 139 wie folgt beschreiben: Ein Überhang 92 weist in Umfangsrichtung U rechts und links zunächst eine Aussparung 94 auf, in der ein Führungsstutzen 225 sitzt. Neben einem Überhang 127 in Umfangsrichtung U rechts und links befindet sich zunächst eine Aussparung 130, in der ein Führungsstutzen 225 sitzt. Ausgehend von dem Überhang 127 befindet sich jenseits der Aussparung 130 eine weitere Aussparung 131, in die Anschlusskontakte 239 (Diodenkopfdrähte) ragen.

Die Verschaltungseinheit 144 weist an im Beispiel nach Figur 8 und 9 insgesamt sechs Positionen Führungsstutzen 225 auf. Diese Führungsstutzen 225 haben die Aufgabe, mit ihren in Figur 9 zum Betrachter gerichteten trichterförmigen Enden einige Leiterenden der Ständerwicklung 18 aufzunehmen und gezielt zu den aus den Führungsstutzen austretenden und sich abgewinkelt darüber erstreckenden (U- bzw. schlaufenförmigen) Anschlusskontakten 180, 183, 186, 189, 192 und 195 zu führen, damit eine vorzugsweise maschinelle Kontaktierung zwischen den Leiterenden und den Anschlusskontakten 180, 183, 186, 189, 192 und 195 leicht möglich ist. Vier der rohrartigen Führungsstutzen 225 und je ein Anschlusskontakt 183, 186, 189 und 192 der Verschaltungseinheit 144 befinden sich zwischen einem leiterartigen Kühlsegment 93 und einer Aufnahme 66. Die beiden anderen Führungsstutzen 225, in Figur 8 an den Positionen "4-Uhr" und ca. "5-Uhr", sind außerhalb der Außenkontur des ersten Kühlkörpers 53. Der Führungsstutzen 225, welcher sich zwischen dem Lagerschild 13.2 und dem Regler 231 in Richtung der Drehachse 26 befindet, ist in Richtung der Drehachse 26 betrachtet, außerhalb der Außenkontur des ersten Kühlkörpers 53 angeordnet.

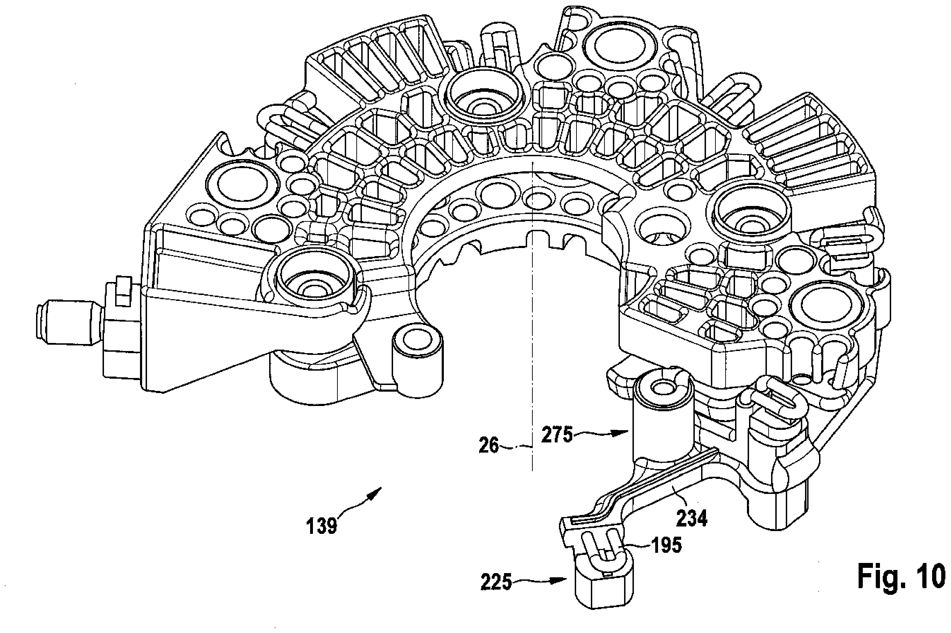

Während der Führungsstutzen 225 an der "4-Uhr"-Position von seiner Größe und Gestaltung her im Wesentlichen wie die anderen vier Führungsstutzen 225 gestaltet ist, weist der Führungsstutzen 225 an der "5-Uhr"-Positon eine Besonderheit auf. So weist dieser nachfolgend "kleine" Führungsstutzen 225 genannte Führungsstutzen 225 zwar auch einen Anschlusskontakt 195 auf. Der Führungsstutzen 225 selbst ist jedoch ein kleiner Führungsstutzen 225 und somit in Bezug zur Drehachse 26 kürzer als die anderen Führungsstutzen 225, siehe auch Figur 10. Die Führungsstutzen 225 sind durch Stege 226 miteinander einstückig verbunden. In dem Steg 226 zwischen dem Führungsstutzen 225 auf der "2-Uhr"-Position (Fig. 9) und dem Führungsstutzen 225 auf der "4-Uhr"-Position befindet sich der Leiterabschnitt 162. In dem Steg 226 zwischen der "4-Uhr"-Position und der "6-Uhr"-Position ist kein Leiterabschnitt eingebettet, jedoch wiederum in dem Steg 226 zwischen der "6-Uhr"- und der "7-Uhr"-Position. Ein weiterer Leiterabschnitt 162 ist zwischen dem Führungsstutzen 225 auf der "9-Uhr"-Position und dem Ende 227 der Verschaltungseinheit 144 eingebettet, welches dann in den Umfangsbogen 198 des Leiterabschnittes 168 übergeht und zum kleinen Führungsstutzen 225 führt. Die Leiterabschnitte sind - mit Ausnahme des Umfangsbogens 198 - jeweils im Kunststoffmaterial der Verschaltungseinheit 144 eingebettet.

Die Verschaltungseinheit 144 befindet sich größtenteils in einem nur wenig bis gar nicht mit Kühlluft umströmten Bereich (Strömungs-Totgebiet). Dieser Bereich ist im radial äußeren Bereich (Drehachse 26) unterhalb des ersten Kühlkörpers 53 (Pluskühlkörper). Jedenfalls gilt dies für die Stege 226 und den Umfangsbogen 198, die beide in Bezug zur radialen Erstreckung des ersten Kühlkörpers 53 (Pluskühlkörper) unter einer äußeren Hälfte seiner radialen Erstreckung angeordnet sind. "Unter" einer äußeren Hälfte bedeutet, dass sich die Stege 226 und der Umfangsbogen 198 zwischen dem Lagerschild und dem Kühlkörper 53 (Pluskühlkörper) befinden. Des Weiteren decken sich vorzugsweise der Umfangsbogen 198 und ein radial äußerer Rand der Aufnahmen 66, s. a. Figur 9.

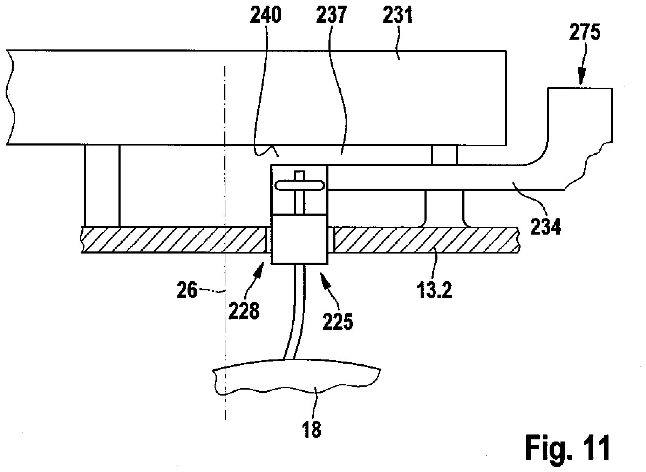

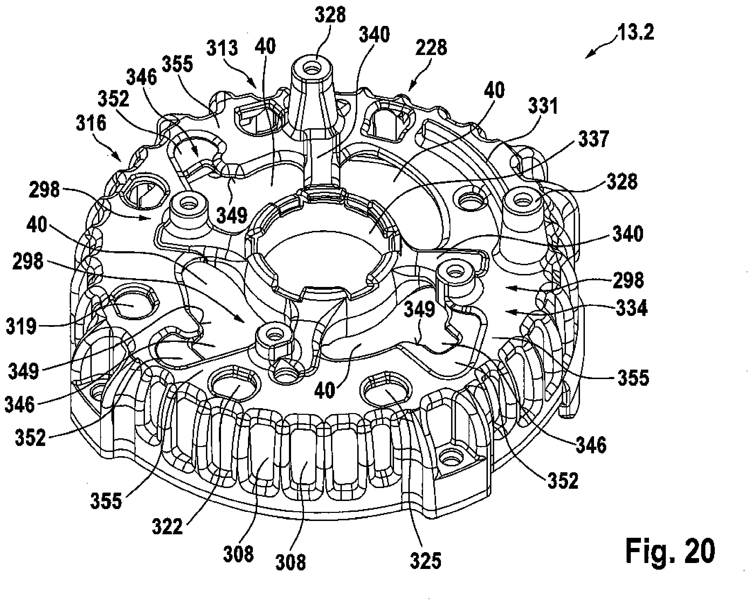

In Figur 11 ist erkennbar, welchen Zweck dies hat: Wie alle anderen Führungsstutzen 225 ist auch der kleine Führungsstutzen 225 in einer Öffnung 228 des Lagerschilds 13.2 angeordnet bzw. eingesteckt. Durch den kleinen Führungsstutzen 225 sind Leiterenden 228 der Ständerwicklung 18 eingesteckt, die an ihrem oberen Ende mit dem Anschlusskontakt 195 elektrisch leitfähig verbunden sind. An dieser Stelle liegt vorzugsweise eine Schweißverbindung oder auch eine Lötverbindung vor. Es ist ebenso auch möglich in einer alternativen Ausgestaltung hier eine Schraubverbindung vorzusehen. In dem dieser kleine Führungsstutzen 225 so kurz ausgeführt ist, ist es möglich, diesen Platz sparend in axialer Richtung (Drehachse 26) zwischen der Ständerwicklung 18 und einem Regler 231 anzuordnen. Der Regler 231 dient dazu, einen Erregerstrom zu erzeugen und mittels hier nicht dargestellten Bürsten über die bereits erwähnte Schleifringbaugruppe 49 die Erregerwicklung 51 mit Erregerstrom zu versorgen und dadurch den Rotor 20 elektromagnetisch zu erregen. Ein Arm 234, in welchem der Leiterabschnitt 168 eingebettet ist und welcher körperlich die zwei Führungsstutzen 225 miteinander verbindet, welche sich außerhalb der Außenkontur des ersten Kühlkörpers 53 befinden, reicht ebenfalls unter den Regler 231 und damit in einen Zwischenraum 237, der sich zwischen einer zum Lagerschild 13.2 in axialer Richtung (Drehachse 26) gerichteten Unterseite 240 des Reglers 231 und dem Lagerschild 13.2 selbst befindet. Der Arm 234, der den kurzen Führungsstutzen 225 mit den anderen Führungsstutzen 225 einstückig verbindet, umgreift dabei einen Befestigungsstutzen 328 von radial innen, Figur 20.

Es ist demnach eine elektrische Maschine 10, insbesondere Wechselstromgenerator, mit einem Rotor 20 offenbart, der eine Drehachse 26 hat, mit einem Stator 16 aus einem Ständereisen 17 und einer darin eingelegten Ständerwicklung 18 die Leiterenden 228 aufweist, die mit einer Gleichrichtereinrichtung 139 verschaltet sind, mit einem Regler 231 zur Regelung eines Erregerstroms und einer Kühleinrichtung in der Gleichrichtereinrichtung 139, mit einem ersten Kühlkörper 53, der zumindest eine Aufnahme 66 aufweist, an der ein Stromgleichrichter 147 aufgenommen ist, mit einem zweiten Kühlkörper 117, wobei der Kühlkörper 117 zumindest eine Aufnahme 120 aufweist, an der ein Stromgleichrichter 150 aufgenommen ist, mit einer Verschaltungseinheit 144, die die Stromgleichrichter 147, 150 zu einer Brückenschaltung verschaltet, wobei die Verschaltungseinheit 144 mehrere einstückig angeformte Führungsstutzen 225 aufweist, in denen Leiterenden 228 der Ständerwicklung 18 aufgenommen sind, wobei ein Führungsstutzen 225 zwischen dem Lagerschild 13.2 und dem Regler 231 in Richtung der Drehachse 26 angeordnet ist.

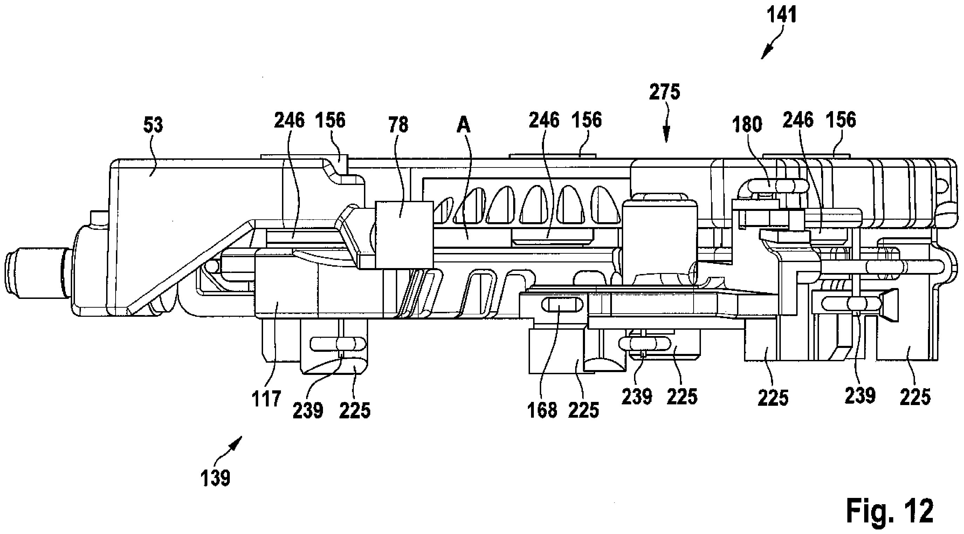

Figur 12 zeigt eine Seitenansicht auf die Kühleinrichtung 141. Distanzstücke 246 zwischen dem ersten Kühlkörper 53 und dem weiteren Kühlkörper 117 sichern einen Abstand A zwischen den beiden Kühlkörpern 53 und 117. Die Führungsstutzen 225 werden in die Öffnungen 228 des Lagerschilds 13.2 eingesteckt, so dass die Stege 226 auf dem Lagerschild 13.2 aufliegen. Der Kühlkörper 117 ist mit einem Teil seines Körpers zwischen je zwei direkt benachbarten Führungsstutzen 225 angeordnet; darüber hinaus ist ein Teil des Kühlkörpers 117 von den Stegen 226 umgeben. In Figur 12 sind einige wenige Anschlusskontakte 239 (Diodenkopfdrähte) der Stromgleichrichter 147 und 150 zu erkennen.

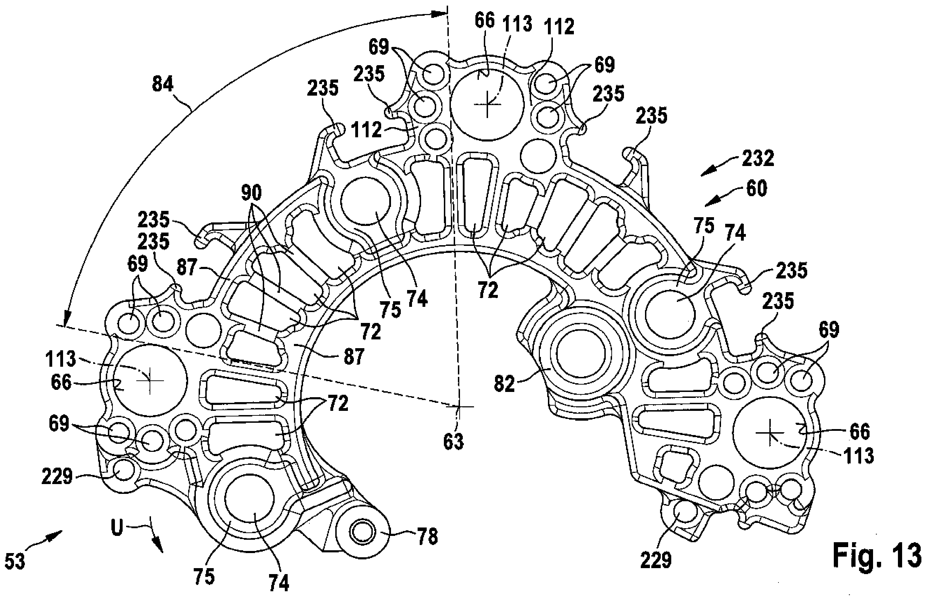

In Figur 13 ist in einem weiteren Ausführungsbeispiel ein erster Kühlkörper 53 abgebildet. Dieser Kühlkörper 53 weist einen bogenförmigen Körperbereich 60 auf. Dieser bogenförmigen Körperbereich 60 weist eine zentrale Mitte 63 auf. Diese zentrale Mitte 63 deckt sich im an das Gehäuse 13.2 montierten Zustand mit der Drehachse 26. Der Kühlkörper 53 hat drei Aufnahmen 66, die dazu dienen, jeweils einen Stromgleichrichter aufzunehmen. Der Stromgleichrichter ist hier beispielsweise eine Plusdiode. Die Aufnahmen 66 haben hier die Gestalt eines Loches, in die später beispielsweise sogenannte Einpressdioden (Plusdioden) eingedrückt werden. Statt eines Loches kann zur Befestigung der Diode alternativ beispielsweise auch eine Vertiefung in der Oberfläche des ersten Kühlkörpers 53 vorgesehen sein, vgl. auch die Beschreibung zum vorgenannten Ausführungsbeispiel. Darüber hinaus weist der Kühlkörper 53 etliche Öffnungen auf, die zur Durchströmung des im Betrieb heißen Kühlkörpers 53 mit Kühlmittel dienen. Um eine Aufnahme 66 herum sind, bogenartig aneinandergereiht, erste Öffnungen 69 angeordnet. Diese ersten Öffnungen 69 sind in Umfangsrichtung U beiderseits einer Aufnahme 66 angeordnet. Zwischen den Aufnahmen 66 und der zentralen Mitte 63 ist in Richtung zur zentralen Mitte 63 zumindest eine länglich geformte zweite Öffnung 72 angeordnet, wobei die zweite Öffnung 72 mit ihrer länglichen Form zumindest im Wesentlichen auf die zentrale Mitte 63 ausgerichtet ist. In weiterer Näherung kann auch festgestellt werden, dass zwischen den Aufnahmen 66 mit den ersten Öffnungen 69 und der zentralen Mitte 63 in Richtung zur zentralen Mitte 63 mehrere länglich geformte zweite Öffnungen 72 angeordnet sind, wobei die zweiten Öffnungen 72 mit ihrer länglichen Form zumindest im Wesentlichen auf die zentrale Mitte 63 ausgerichtet sind. Zwei Öffnungen 229, sozusagen in zweiter Reihe um die jeweilige Aufnahme 66, dienen zur Befestigung des Kühlkörpers 53 an der Verschaltungseinheit 144, in dem ein optionaler vorzugsweise klemmender Stift (Presspassung zwischen Stift und Öffnung 229) oder Schnapphaken der Verschaltungseinheit 144 in die jeweilige Öffnung 229 eingreift.

In dem Körperbereich 60 sind weiters drei zylindrische mit je einem Loch 74 versehene Senkbereiche 75 vorgesehen. Dort ist die Materialstärke des Kühlkörpers 53 auf ca. 40% dessen reduziert, die bei den Aufnahmen 66 vorgesehen ist. Diese Senkbereiche 75 dienen bei der Montage zur Befestigung der Gleichrichtereinrichtung 139 am Lagerschild 13.2. Eine Gewindehülse 78 dient zur Befestigung und Kontaktherstellung mit einem weiteren Bauteil der Gleichrichtereinrichtung 139 und ist, wie bereits beim ersten Ausführungsbeispiel, einstückig an den Kühlkörper 53 angeformt. Ein Einsetzdom 82 dient zur späteren Aufnahme und Befestigung eines sogenannten B+-Bolzens (B-Plus-Bolzen), an dem ein Ladekabel befestigt wird, um einer Fahrzeugbatterie elektrischen Strom zuführen zu können.

Wie bereits erwähnt, sind mehrere Aufnahmen 66 vorhanden, die am Umfang 81 des Kühlkörpers 53 voneinander beabstandet angeordnet sind.

Aus Figur 13 ist zu entnehmen, dass in einem Segment 84 zwischen zwei Aufnahmen 66 mehrere länglich geformte zweite Öffnungen 72 angeordnet sind, die sich zwischen zwei bogenförmig erstreckenden Holmen 87 erstrecken. Die zweiten Öffnungen 72 zwischen zwei bogenförmigen Holmen 87 sind durch Stege 90 getrennt. Die Stege 90 erstrecken sich vorzugsweise radial. Die beiden Holme 87 verlaufen zumindest in etwa kreisbogenförmig.

Um die Aufnahmen 66 herum sind die Öffnungen 69 angeordnet. Zur Verbesserung des Zugriffs zu nachfolgend gezeigten Anschlusskontakten, die in der Gleichrichtereinrichtung 139 neben den Öffnungen 69 positioniert werden, ist vorgesehen, Umrandungen 112 der Öffnungen 69 auf der Seite der Öffnungen 69, die einem Zentrum 113 einer Aufnahme 66 abgewandt sind, in ihrer Materialstärke in Achsrichtung (Drehachse 26) weniger stark auszuführen, als dies zwischen den Aufnahmen 66 und den Öffnungen 69 der Fall ist.

Am Außenumfang 232 des Kühlkörpers 53 befinden sich beispielhaft acht Hakenelemente 235. Je zwei paarweise angeordnete Hakenelemente 235 stehen sich so gegenüber, dass beide zusammen mit dem Außenumfang 232 einen Hinterschnitt bilden, auf den später nochmals eingegangen werden wird.

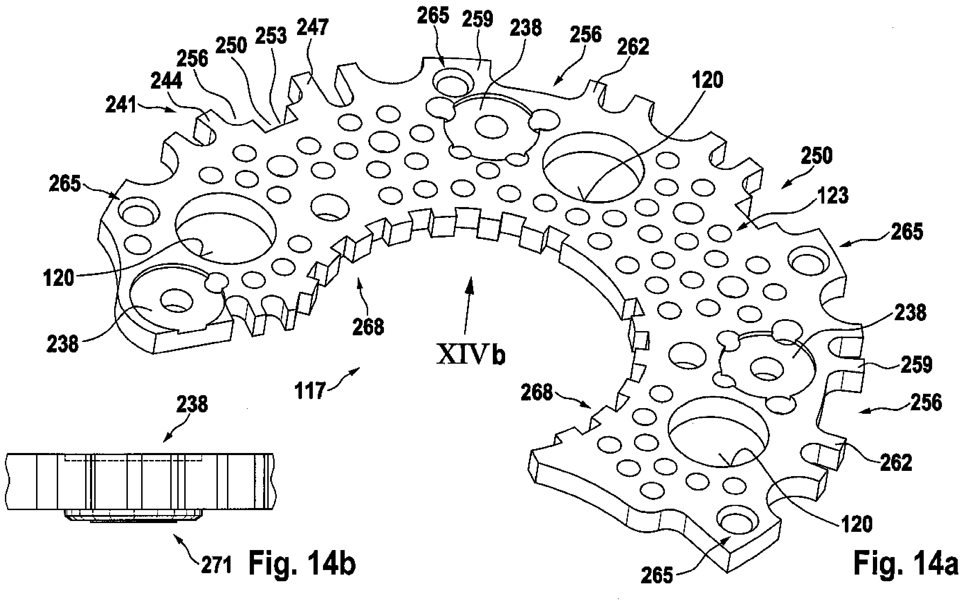

In Figur 14a ist eine räumliche Ansicht auf einen weiteren Kühlkörper 117 des zweiten Ausführungsbeispiels dargestellt. Der Kühlkörper 117 hat drei Aufnahmen 120, die dazu dienen, jeweils einen Stromgleichrichter aufzunehmen. Der Stromgleichrichter ist hier beispielsweise eine Minusdiode. Die Aufnahmen 120 haben hier die Gestalt eines Loches, in die später beispielsweise sogenannte Einpressdioden (Minusdioden) eingedrückt werden. Alternativ kann beispielsweise auch eine Vertiefung in der Oberfläche des weiteren Kühlkörpers 120 vorgesehen sein, siehe auch Erläuterungen zuvor hinsichtlich verschiedener Befestigungsmöglichkeiten für Dioden. Darüber hinaus weist der Kühlkörper 120 etliche Öffnungen 123 auf, die zur Durchströmung des im Betrieb heißen Kühlkörpers 120 mit Kühlmittel dienen. Des Weiteren sind auf der Oberfläche des Kühlkörpers 117 drei zylindrische Vertiefungen 238 eingebracht, die dazu dienen, zylindrische Distanzstücke zu zentrieren. Am Außenumfang 241 des Kühlkörpers 117 sind verschiedene Rippen dargestellt. Die Rippen 244 und 247 sind einander direkt benachbarte Rippen, die auch als sehr flache Kühlrippen des geblechten - bspw. 4mm starken - Kühlkörpers 117 bezeichnet werden können. Zwischen diesen beiden Rippen 244 und 247 befindet sich eine gestufte Nische 250. Diese gestufte Nische 250 besteht aus einer kleinen Teilnische 253, die einem hier nicht dargestellten Zentrum des Kühlkörpers 117 näher ist als eine größere, sich nach radial weiter außen öffnende Außennische 256, die auch Teil der Nische 250 ist. Eine derartige gestufte Nische 250 findet sich am Außenumfang 241 insgesamt zwei Mal. Eine weitere spezielle Nische 256 - ebenfalls begrenzt durch Rippen 259 und 262 - befindet sich ebenfalls am Außenumfang 241. Beispielhaft vier Mal am Außenumfang 241 des Kühlkörpers 117 und damit direkt oberhalb der Stege eines in diesem Beispiel noch nicht gezeigten Verschaltungsmittels, sind runde Löcher 265 zu erkennen, die auf der Seite, auf der sich die Vertiefungen 238 befinden, gesenkt sind. Am Innenumfang des Kühlkörpers 117 sind Rippen 268 verteilt angeordnet.

In Figur 14b, eine Ansicht auf die Rippen 268, ist eine Ansicht auf eine Vertiefung 238 zu erkennen. Der Vertiefung 238 steht ein im Durchmesser etwas größeres Podest 271 gegenüber.

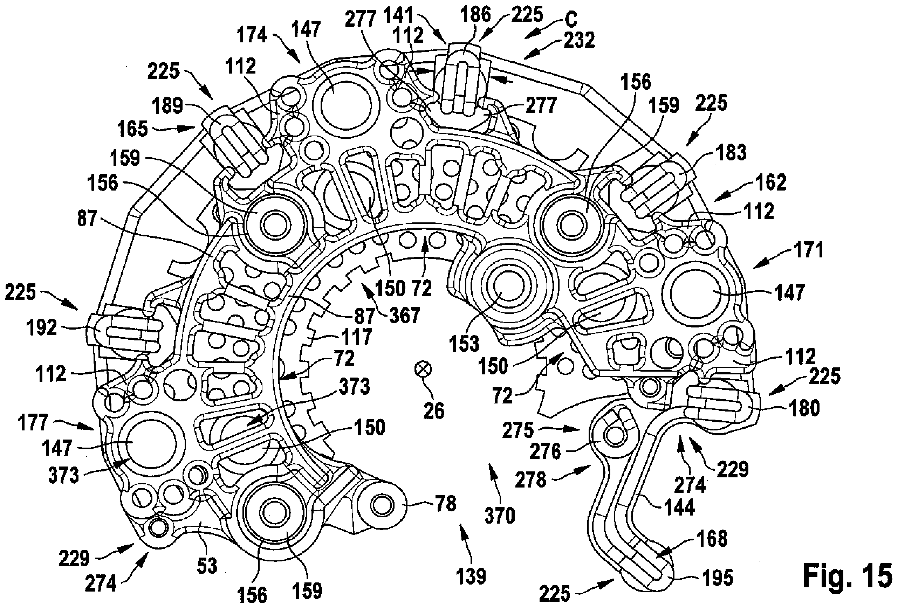

Figur 15 zeigt eine Draufsicht auf die Gleichrichtereinrichtung 139 bzw. zusammengebaute Kühleinrichtung 141 aus erstem Kühlkörper 53 (Pluskühlkörper), zweitem Kühlkörper 117 (Minuskühlkörper), Verschaltungseinheit 144, positiven Stromgleichrichtern 147 (Plusdioden), negativen Stromgleichrichtern 150 (Minusdioden), B+-Bolzen 153, Isolationshülsen 156 und Nieten 159 (Rohrnieten). Des Weiteren sind hier nicht erkennbare Distanzstücke verwendet. Die Ansicht auf die Kühleinrichtung 141 entspricht in Bezug zur Figur 1 bei abgenommener Schutzkappe 47 der Ansicht von rechts in Richtung der Drehachse 26.

Die Verschaltungseinheit 144 weist in bekannter Weise mehrere Leiterabschnitte 162, 165 und 168 auf, die dazu dienen je ein Paar 171, 174 und 177 aus je einem positiven Stromgleichrichter 147 (Plusdiode) und je einem negativen Stromgleichrichter 150 miteinander so zu verschalten, dass die an den Anschlusskontakten 180, 183, 186, 189, 192 und 195 (Anschlussbogen) angeschlossenen Ständerwicklungen und die von ihnen gelieferte Wechselspannung gleichgerichtet wird. Die Anschlusskontakte 180 und 183 sind mit dem Paar 171, die Anschlusskontakte 186 und 189 sind mit dem Paar 174 und die Anschlusskontakte 192 und 195 (über den Umfangsbogen 198) sind mit dem Paar 177 verbunden.

In Figur 15 ist auch zu erkennen, dass - wie bereits beim ersten Ausführungsbeispiel - die länglichen Öffnungen 72 axial (Drehachse 26) über den negativen Stromgleichrichtern 150 (Minusdioden) angeordnet sind. Die negativen Stromgleichrichter 150 (Minusdioden) sind auch hier - bezogen auf die Drehachse 26 als Zentrum - auf einem kleineren Radius als die positiven Stromgleichrichter 147 (Plusdioden). Der durch den inneren der beiden Holme 87 begrenzte Teil des Kühlkörpers 53 ist auf einem größeren Radius angeordnet als der Bereich des Kühlkörpers 117, der an dieser Umfangsstelle angeordnet ist.

Die Gleichrichteranordnung wird an den Anschlusskontakten 180, 183, 186, 189, 192 und 195 (Anschlussbogen) an die Ständerwicklungen angeschlossen. Hierzu ist, wie in Figur 11 gezeigt, vorgesehen, dass Leiterenden 228 (Ständeranschlussdrähte) durch die Führungsstutzen 225 und die schlaufenförmigen Anschlusskontakte 180, 183, 186, 189, 192 und 195 hindurchgeschoben werden. Die eigentliche Befestigung und Kontaktgabe zwischen den Anschlusskontakten 180, 183, 186, 189, 192 und 195 und den Leiterenden 228 erfolgt dadurch, dass die Anschlusskontakte 180, 183, 186, 189, 192 und damit die seitlichen Drahtbereiche - siehe Beispiel und Kontaktstelle C (Fig. 15) - des Leiterabschnitts 165 oberhalb des Führungsstutzens 225 in Richtung der dort eingezeichneten Pfeile gedrückt und nach Kontakt mit den Leiterenden 228 miteinander verschweißt werden. Alternativ ist hier bspw. auch eine Kontaktgabe durch Löten möglich. Damit die seitlichen Drahtbereiche des Leiterabschnitts 165 überhaupt aufeinander zubewegt werden können, ist beispielsweise eine entsprechend ausgeformte (Schweiß-)Zange erforderlich. Deren Zangenteile müssen zwischen einen seitlichen Drahtbereich eines Anschlusskontakts und die Umrandungen 112 der Öffnungen 69 auf der Seite der Öffnungen 69, die einem Zentrum 113 einer Aufnahme 66 abgewandt sind, eingebracht werden. Damit dies möglich ist, ist die Materialstärke der Umrandung 112 in Achsrichtung (Drehachse 26) weniger stark ausgeführt, als dies zwischen den Aufnahmen 66 und den Öffnungen 69 der Fall ist. Der Kühlkörper 53 ist dort weniger dick. In Figur 15 sind die bereits zu Figur 13 erwähnten Stifte 274 erkennbar, wie sie durch die Öffnung 229 hindurchragen und in der Öffnung 229 den Kühlkörper 53 mit der Verschaltungseinheit 144 klemmend verbinden. Von einem dem kurzen Führungsstutzen 225 direkt zugeordneten Anschlusskontakt 195 geht einstückig ein Leiter in Gestalt eines Umfangsbogens 198 aus, der abschnittsweise in Richtung der Drehachse 26 unter einem Außenrand einer Aufnahme 66 angeordnet ist. Der Umfangsbogen 198 ist zwischen dem Lagerschild 13.2 und dem Kühlkörper 53 angeordnet.

Ein Anschraubstutzen 275 trägt eine Kontaktschleife 276, die unter sich eine in den Kunststoff des Anschraubstutzens eingebettete, umspritzte Schraubenmutter 278 abdeckt. Die Kontaktschleife 276 dient als sogenannte "Klemme V". Der Anschraubstutzen 275 ist in allen Ausführungsbeispielen gleich aufgebaut.

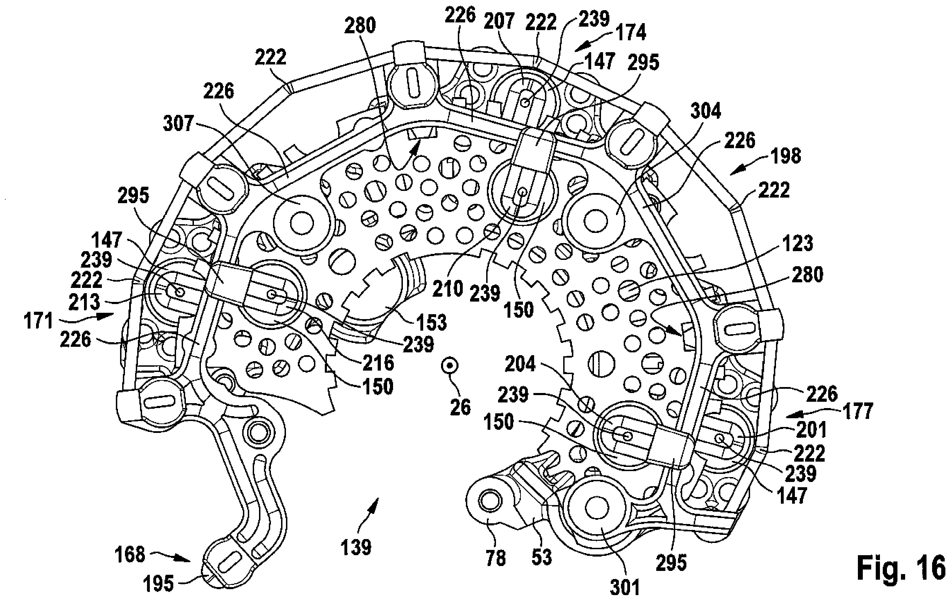

Figur 16 zeigt die zusammengebaute Kühleinrichtung 141 von der anderen, in Figur 15 nicht gezeigten Seite. Von dieser Seite sind Anschlusskontakte 201 und 204, Anschlusskontakte 207 und 210 und Anschlusskontakte 213 und 216 erkennbar, die je ein Paar 171, 174 und 177 aus je einem positiven Stromgleichrichter 147 (Plusdiode) und je einem negativen Stromgleichrichter 150 miteinander verschalten. Diese Verschaltung entspricht einer üblichen Brückengleichrichterschaltung. Die positiven Stromgleichrichter 147 (Plusdioden), Einpressdioden wie auch die negativen Stromgleichrichter 150 (Minusdioden), sind mit dem ersten Kühlkörper 53 elektrisch leitfähig verbunden, so dass über die Stromgleichrichter 150 am B+-Bolzen 153 im Betriebsfall (eingeschalteter Zustand, Erregerstrom, drehender Rotor 20) eine positive Spannung anliegt.

Der Löcher 123 aufweisende Kühlkörper 117 ist im Wesentlichen ringsegmentförmig, wobei die beiden Kühlkörper 53 und 117 durch- und zwischenströmbar mit Abstand übereinander geschichtet sind. Wie auch aus Figur 9 erkennbar ist, weist der Umfangsbogen 198 des Leiterabschnittes 168 mehrere Knickstellen 222 auf. Einige dieser Knickstellen 222 sind an einer gleichen Umfangsposition wie Anschlusskontakte 201, 207 und 213. Die Knickstellen 222 führen dazu, dass ein hier nicht näher bezeichneter Abstand zwischen einer Knickstelle 222 und einem Anschlusskontakt 201, 207 und 213 größer ist, als wenn an der Position der Knickstelle 222 ein einfacher Kreisbogen vorgesehen wäre. Dies verbessert beispielsweise die Zugänglichkeit zu den Anschlusskontakten 201, 207 und 213, die mit den Anschlusskontakten der Stromgleichrichter 147 (Diodenkopfdrähte) verbunden werden müssen.

Die Verschaltungseinheit 144 weist an im Beispiel nach Figur 15 und 16 insgesamt sechs Positionen Führungsstutzen 225 auf. Diese Führungsstutzen 225 haben die bereits genannte Aufgabe, mit ihren in Figur 16 zum Betrachter gerichteten trichterförmigen Enden einige Leiterenden der Ständerwicklung 18 aufzunehmen und gezielt zu den Anschlusskontakten 180, 183, 186, 189, 192 und 195 zu führen, damit eine vorzugsweise maschinelle Kontaktierung zwischen den Leiterenden und den Anschlusskontakten 180, 183, 186, 189, 192 und 195 leicht möglich ist. Während der Führungsstutzen 225 an der "7-Uhr"-Position von seiner Größe und Gestaltung her im Wesentlichen wie die anderen vier Führungsstutzen 225 ("9Uhr"-, "10Uhr"-, "12Uhr"- und "2Uhr"-Position, Positionsangaben in Bezug zu Figur 16) gestaltet ist, weist der Führungsstutzen 225 an der "6-Uhr"-Positon eine Besonderheit auf. So weist dieser nachfolgend "kleine" Führungsstutzen 225 genannte Führungsstutzen 225 zwar auch einen Anschlusskontakt 195 auf. Der Führungsstutzen 225 selbst ist jedoch ein kleiner Führungsstutzen 225 und somit in Bezug zur Drehachse 26 kürzer als die anderen Führungsstutzen 225 (siehe auch Figur 10). Der Führungsstutzen 225 zwischen dem Lagerschild 13.2 und dem Regler 231 ist in Richtung der in dem Führungsstutzen 225 angeordneten Leiterenden 228 kürzer als andere Führungsstutzen 225. Die Führungsstutzen 225 sind durch Stege 226 miteinander einstückig verbunden. In dem Steg 226 zwischen dem Führungsstutzen 225 auf der "6-Uhr"-Position und dem Führungsstutzen 225 auf der "7-Uhr"-Position befindet sich der Leiterabschnitt 162. In dem Steg 226 zwischen der "12-Uhr"-Position und der "2-Uhr"-Position ist kein Leiterabschnitt eingebettet, jedoch wiederum in dem Steg 226 zwischen der "12-Uhr"- und der "10Uhr"-Position. Ein weiterer Leiterabschnitt 162 ist zwischen dem Führungsstutzen 225 auf der "2-Uhr"-Position und dem Ende 227 der Verschaltungseinheit 144 eingebettet, welches dann in den Umfangsbogen 198 des Leiterabschnittes 168 übergeht und über den Umfang zu dem "kleine" Führungsstutzen 225 geführt ist. In Figur 16 sind die Anschlusskontakte 239 (Diodenkopfdrähte) der Stromgleichrichter 147 und 150 zu erkennen.

In Figur 15 wird die Bedeutung der bereits erwähnten Hakenelemente 235 klar: Die am Außenumfang 232 des Kühlkörpers 53 befindlichen acht Hakenelemente 235 führen zu einer eindeutigen Lagezuordnung zwischen dem Kühlkörper 53 und den aufgenommenen Stromgleichrichtern 147. Dies ermöglicht eine zuverlässig genaue Positionierung der Anschlusskontakte 239 (Diodenkopfdrähte) der positiven Stromgleichrichter 147 zu den Anschlusskontakten 201, 207 und 213 der Verschaltungseinheit 144. Je zwei paarweise angeordnete Hakenelemente 235 stehen sich so gegenüber, dass beide zusammen mit dem Außenumfang 232 einen Hinterschnitt bilden. Zwei einander gegenüberstehende Hakenelemente 235 hintergreifen zwei am Führungsstutzen 225 angeformte Hinterschnitte 277, die sich in der Draufsicht nach Figur 15 beiderseits je eines Anschlusskontakts 183, 186, 189, 192 und 195 befinden. In Bezug zur Drehachse 26 sind die Hinterschnitte 277 zumindest teilweise an der gleichen axialen Position wie die Führungsstutzen 225.

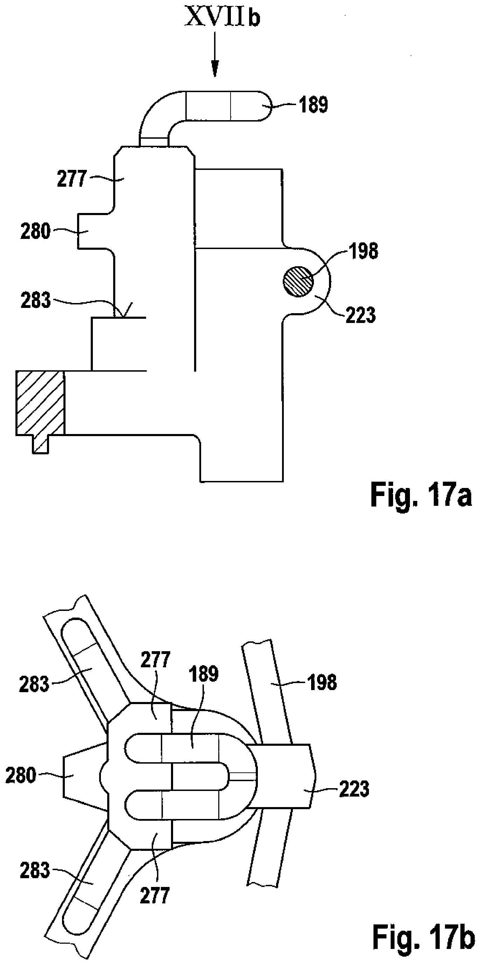

Zumindest ein Teil der Führungsstutzen 225 bzw. deren nächste jeweilige Umgebung hat neben der Aufgabe, die Anschlusskontakte 180, 183, 186, 189, 192 und 195 zu halten, weitere Funktionen. So ist einerseits der Kühlkörper 117 ggü. der Verschaltungseinheit 144 zu zentrieren und in Umfangsrichtung an der richtigen Position zu halten bzw. zu greifen. Des Weiteren ist in Achsrichtung (Drehachse 26) eine korrekte Lage des Kühlkörpers 117 zur Verschaltungseinheit 144 sicherzustellen. Dadurch wird es ermöglicht, einerseits die sich bei diesem Montageschritt bereits in den Aufnahmen 66 befindlichen Stromgleichrichter 150 (Minusdioden) an die richtige Position zu bringen, d. h. den Anschlusskontakten 204, 210 und 216 der Verschaltungseinheit 144 lagerichtig zuzuführen. Dies wird dadurch erreicht, dass an einer radialen Innenseite der Führungsstutzen 225, siehe auch Figur 17a und 17b, ein Zentrierabsatz 280 an die Führungsstutzen 225 angeformt ist. Dieser Zentrierabsatz 280 oder Zentrierstummel ragt beim Montieren des Kühlkörpers 117 auf die Verschaltungseinheit 144 in die gestufte Nische 250 und ganz besonders in die kleine Teilnische 253 hinein, siehe auch Figur 16. Diese Zentrierung wirkt bevor die Anschlusskontakte 239 (Diodenkopfdrähte) der Stromgleichrichter 150 (Minusdioden) in die Anschlusskontakte 204, 210 und 216 der Verschaltungseinheit 144 lagerichtig zugeführt sind. Vorzugsweise wirkt die Zentrierung durch den Zentrierabsatz 280 oder Zentrierstummel auch dann noch, wenn der Kühlkörper 117 seine Endlage auf den Podesten 283 eingenommen hat, muss es aber nicht mehr, da dann üblicherweise Diodenkopfdrähte bereits in die entsprechenden Anschlusskontakte eingefädelt sind. Die Rippen 244 und 247 sind in dieser Endposition rechts bzw. links von einem Führungsstutzen 225 angeordnet und führen eine lagerichtige Zuordnung des Kühlkörpers 117 zum Führungsstutzen 225 in Umfangsrichtung herbei. Optionale Stifte und/oder Schnapphaken auf der Verschaltungseinheit 144 bzw. den Stegen 226 sind auf den Kühlkörper 117 gerichtet und greifen zusätzlich in Öffnungen ein, um den Kühlkörper 117 zumindest reibschlüssig und/oder formschlüssig an der Verschaltungseinheit 144 zu halten.
Eine Baueinheit 284 aus dem Kühlkörper 53, im Beispiel drei Isolationshülsen 156, drei Distanzstücken 246 und drei Nieten 159 (Rohrnieten) mitsamt im Beispiel drei positiven Stromgleichrichtern 147 (Plusdioden) und dem B+-Bolzen 153 wird vormontiert. Dabei werden zunächst an den Aufnahmen 66 die positiven Stromgleichrichter 147 (Plusdioden) zur Aufnahme gebracht (Einpressdioden werden in die als zylindrische Löcher gestalteten Aufnahmen 66 eingepresst). Die Anschlusskontakte 239 (Diodenkopfdrähte) ragen damit durch die Löcher 74. Vorzugsweise danach werden die drei Distanzstücke 246 auf die Seite des Kühlkörpers 53 gelegt, auf der die Anschlusskontakte 239 (Diodenkopfdrähte) zu erkennen bzw. zu kontaktieren sind. Die gestuften Isolationshülsen 156 werden von der anderen Seite (Oberseite) in die Löcher 74 gesteckt und anschließend werden je ein Distanzstück 246, eine Isolationshülse 156 und eine Niete 159 (Rohrniete) an bzw. in einem Loch 74 miteinander befestigt. Ein Bund 286 der Niete 159 liegt dann an einer Stufe 289 der Isolationshülse 156 bzw. an einer Stirnfläche 292 eines Distanzstücks 246 an. Diese Baueinheit 284 wird anschließend auf den Kühlkörper 117 aufgesetzt, so dass der Bund 286 der Niete 159 in einer zylindrischen Vertiefung 238 des Kühlkörpers 117 zur Anlage kommt. Die Hakenelemente 235 umgreifen dabei in der beschriebenen Weise jeweils die am Führungsstutzen 225 angeformten Hinterschnitte 277. Gleichzeitig werden die Anschlusskontakte 239 (Diodenkopfdrähte) der positiven Stromgleichrichter 147 zu den Anschlusskontakten 201, 207 und 213 der Verschaltungseinheit 144 geführt und mit diesen verbunden.

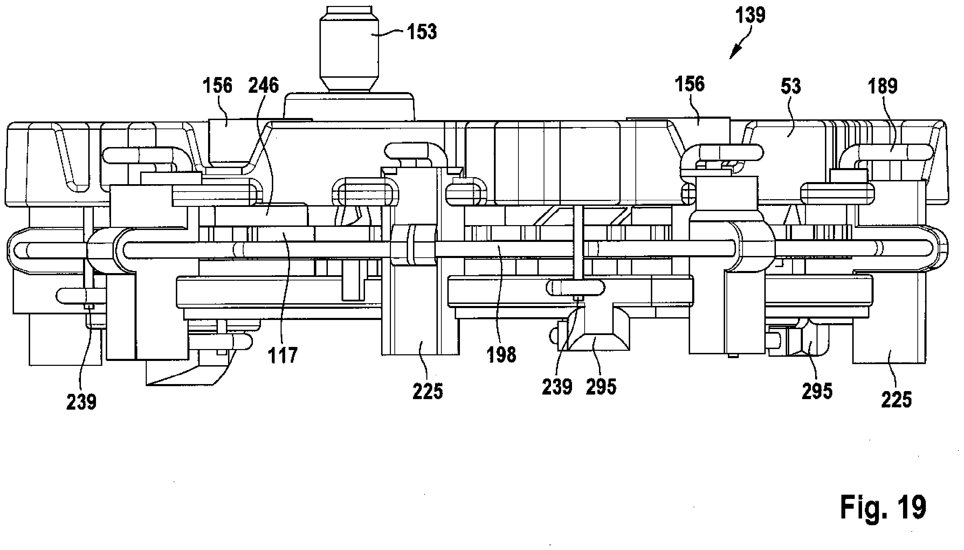

Figur 19 zeigt in einer Seitenansicht (senkrecht zur Drehachse 26) den Aufbau der Kühleinrichtung bzw. des Gleichrichters. In dieser Seitenansicht sind bei der Verschaltungseinheit 144 von den Stegen 226 ausgehend und nach unten ragend, das heißt an der vom Kühlkörper 117 abgewandten Seite vom Kühlkörper 117 wegragend, Podeste 295 zu sehen, die auch in der Unteransicht von Figur 16 erkennbar sind. Während die Anschlusskontakte 201, 207 und 213 sich nach radial außen erstrecken und in der Ebene der Stege 226 aus diesen austreten, ist in den Stegen 226 der Draht in Achsrichtung (Drehrichtung 26) und in die vom Kühlkörper 53 wegweisenden Richtung nach "unten" umgebogen, um sich nach einer gewissen Strecke nach radial innen und aus den Podesten 295 austretend zu erstrecken.

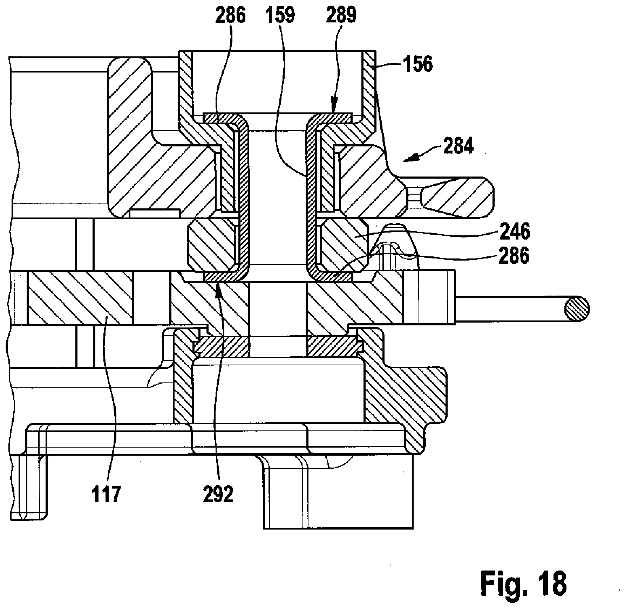

In Figur 20 ist in räumlicher Darstellung das Lagerschild 13.2 dargestellt. Dieses Lagerschild 13.2 zeigt drei Befestigungsstutzen 298 (Schraubstutzen mit Innengewinde), die dazu dienen, die Gleichrichtereinrichtung 139 zur Befestigung am Lagerschild 13.2 aufzunehmen. Dazu werden die in Figur 16 dargestellten runden, zentral gelochten Auflageflächen (Einlegeteile aus Metall, siehe auch Figur 18) 301, 304 und 307 auf je einen Befestigungsstutzen 298 aufgelegt. Dabei wird die Auflagefläche 301, welche der Gewindehülse 78 am nächsten gelegen ist, auf den Befestigungsstutzen 298 gesetzt, der in der Figur 20 rechts abgebildet ist. Die Auflagefläche 304, welche zwischen den beiden anderen Auflageflächen 301 und 307 angeordnet ist, wird auf den mittleren der drei Befestigungsstutzen 298 gesetzt. Am Außenumfang des Lagerschilds 13.2 befinden sich verteilt etliche schlitzförmige Luftaustrittsöffnungen 308

Die in Figur 15 und 16 dargestellten Führungsstutzen 225 werden mit Bezug zu Figur 16 wie folgt in Öffnungen 228, 313, 316, 319, 322 und 325 eingesetzt: Wie bereits zu Figur 11 beschrieben, wird der kleine Führungsstutzen 225 in die Öffnung 228 eingesetzt, die axial (Drehachse 26) unterhalb des Reglers angeordnet ist. Diese Öffnung ist zwischen einem Befestigungsstutzen 328 (Schraubstutzen mit Innengewinde) und einem Damm 331 im Stirnbereich 334 des Lagerschilds 13.2 eingebracht. Durch den Befestigungsstutzen 328 ist der Regler 231 gehalten. Dementsprechend sind die anderen Führungsstutzen 225 nacheinander in die genannten Öffnungen eingesetzt.

Zentral am Lagerschild 13.2 ist eine Nabe 337 angeformt, in die das Lager 28 eingesetzt ist (siehe Figur 1). Diese Nabe ist hier mit vier Streben 340 mit dem Stirnbereich 334 des Lagerschilds 13.2 verbunden. Zwischen den Streben 340 und dem Stirnbereich 334 befinden sich vier große Öffnungen 40, durch die im Betrieb des Generators bzw. der elektrischen Maschine 10, verursacht durch die Bewegung des Lüfters 30, Kühlluft angesaugt wird. Drei dieser Öffnungen 40 sind mit durchgängigen Nischen 346 versehen, die am radial äußeren Rand 349 eingebracht sind. In diese Nischen 346 ragen die Podeste 295 der Verschaltungseinheit 144 derart hinein, dass diese auf einem gemeinsamen axialen Niveau (Drehachse 26) sind. D. h. in eine aus den Öffnungen (Hauptöffnungen) 40 gebildeten Ebene erstrecken sich das Podest 295 und ggf. der Anschlussdraht 216, der sich dann beispielsweise ausschließlich in dieser Ebene erstreckt. Die Form der Podeste 295 und die Form der Nischen 346 sind aneinander angepasst. Dies bedeutet, dass die Podeste 295 die Nischen 346 nahezu oder vollständig ausfüllen. Vorteil dieser Anordnung ist eine möglichst große nutzbare Öffnung 40 bei nach Möglichkeit kleinem effektivem Randanteil der Öffnung 40 zu erreichen. Dies hat den Effekt, dass strömungsmechanisch bedingte Randeffekte, wie beispielsweise den Kühlluftdurchsatz verringernde Grenzschichten, weniger ausgebildet sind. Darüber hinaus grenzt zumindest eine Öffnung 40 - hier drei - an einen ebenen Stirnflächenbereich 352, der gegenüber anderen Stirnflächenbereichen 355 von axial außen betrachtet abgesenkt ist. Dies hat den Vorteil, dass trotz ggf. aufliegendem Steg 226 ein größerer Spalt zwischen Steg 226 und Lagerschild 13.2 erzeugt ist, der der Strömungswiderstand senkt und den Luftdurchsatz dadurch erhöht. Bei einer dreisträngigen elektrischen Maschine 10 würden wie im hier beschriebenen Fall drei Nischen 346 durch entsprechende Podeste 295 besetzt sein. Bei einer fünfsträngigen Maschine wären fünf Nischen 346 durch entsprechende Podeste 295 besetzt. Es ist jedoch nicht notwendiger Weise so, dass bei jedem Podest 295 eine Nische 346 ausgebildet sein muss.

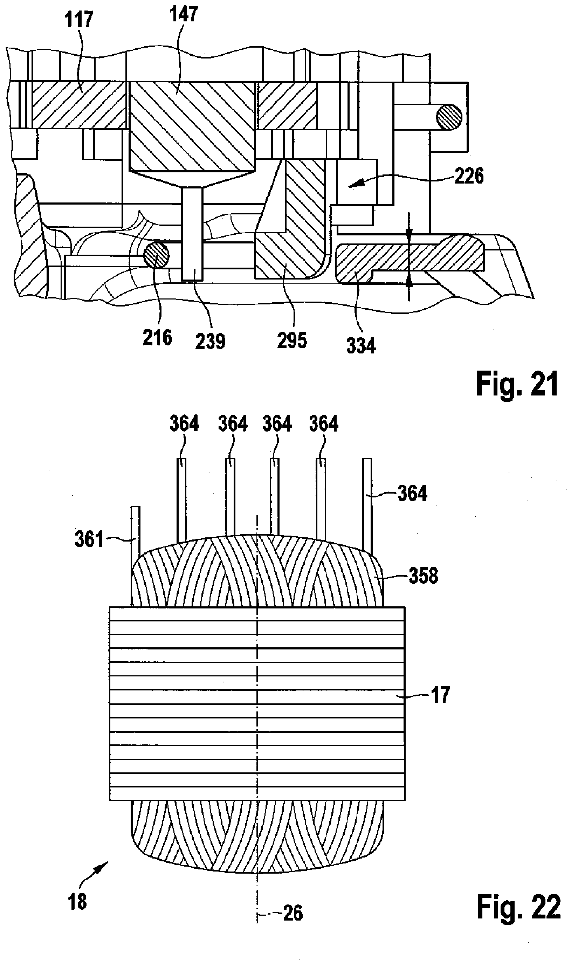

Der bereits oben erwähnte kurze Führungsstutzen 225 bedingt auf der Seite des Stators 16 mit seinem Ständereisen 17, in dessen Nuten eine Ständerwicklung 18 mit einzelnen Phasen- oder Strangwicklungen 358 eingelegt ist, Figur 22, bei einem Ständeranschluss 361 eine deutlich kürzere, vorzugsweise axiale Erstreckung (Drehachse 26) bzw. Länge gegenüber den anderen Ständeranschlüssen 364. Deutlich kürzer bedeuten bspw. 20 mm Längenunterschied (bspw. eingebauter Zustand, in der elektrischen Maschine). Im Rahmen der vorliegenden Konstruktion befindet sich somit ein Ständeranschluss 361 im kurzen Führungsstutzen 225 unter dem Regler 231, während die anderen hier fünf Ständeranschlüsse 364 in den anderen (langen) Führungsstutzen 225 eingeschoben sind. Alle Ständeranschlüsse 361 und Ständeranschlüsse 364 erstrecken sich in axialer Richtung (Drehachse 26), z. B. in den Führungsstutzen 225.

Das zweite ab den Figuren 13 beschriebene Ausführungsbeispiel weist einen inneren Holm 87 auf, der in Bezug zur Drehachse 26 und an der gleichen Umfangsposition auf einem größeren Radius als der Innenrand 367 angeordnet ist. Dies führt dazu, dass sich eine zentrale Öffnung 370 der Gleichrichtereinrichtung 139 vom Lagerschild 13.2 nach axial außen weg trichterartig vergrößert.

In allen Ausführungsbeispielen sind die gezeigten Böden 373 der als Einpressdioden beispielhaft dargestellten Stromgleichrichter 147 und 150 vom Lagerschild 13.2 weggerichtet. Der Kühlkörper 53 ist einstückig aus einem Metall bzw. einer Metalllegierung mittels eines Druckgussverfahrens hergestellt. Es kommt hierzu Aluminium oder eine Aluminiumlegierung zum Einsatz. Für den Kühlkörper 117 kommen die gleichen Materialien zum Einsatz.

## Patentansprüche

1. Elektrische Maschine (10), insbesondere Wechselstromgenerator, mit einem Rotor (20), der eine Drehachse (26) hat, mit einem Stator (16) aus einem Ständereisen (17) und einer darin eingelegten Ständerwicklung (18), die Leiterenden (228) aufweist, die mit einer Gleichrichtereinrichtung (139) verschaltet sind, mit einem Regler (231) zur Regelung eines Erregerstroms und einer Kühleinrichtung in der Gleichrichtereinrichtung (139), mit einem ersten Kühlkörper (53), der zumindest eine Aufnahme (66) aufweist, an der ein Stromgleichrichter (147) aufgenommen ist, mit einem zweiten Kühlkörper (117), wobei der Kühlkörper (117) zumindest eine Aufnahme (120) aufweist, an der ein Stromgleichrichter (150) aufgenommen ist, mit einer Verschaltungseinheit (144), die die Stromgleichrichter (147,150) zu einer Brückenschaltung verschaltet, wobei die Verschaltungseinheit (144) mehrere einstückig angeformte Führungsstutzen (225) aufweist, in denen Leiterenden (228) der Ständerwicklung (18) aufgenommen werden können,
**dadurch gekennzeichnet, dass** ein Führungsstutzen (225) kürzer als andere Führungsstutzen (225) ist und zwischen der Ständerwicklung (18) und einem Regler (231) der elektrischen Maschine (10) in Richtung der Drehachse (26) angeordnet ist und die Verschaltungseinheit (144) einen Arm (234) aufweist, der den kürzeren Führungsstutzen (225) an einem freien Ende des Arms (234) mit den anderen Führungsstutzen (225) einstückig verbindet, wobei der Arm (234) bogenförmig verläuft und der bogenförmige Arm (234) an einer radial inneren Seite eines Befestigungsstutzens herum verläuft.

2. Elektrische Maschine (10) nach Anspruch 1, **dadurch gekennzeichnet, dass** der kürzere Führungsstutzen (225), der Arm (234) und der mit dem Arm (234) direkt verbundene Führungsstutzen (225) außerhalb der Außenkontur des ersten Kühlkörpers (53) angeordnet sind.

3. Elektrische Maschine (10) nach einem der vorstehenden Ansprüche, **dadurch gekennzeichnet, dass** von einem dem kurzen Führungsstutzen (225) direkt zugeordneten Anschlusskontakt (195) ein Leiter in Gestalt eines Umfangsbogens (198) ausgeht, der abschnittsweise in Richtung der Drehachse (26) unter einem Außenrand mindestens einer Aufnahme (66) angeordnet ist.

4. Elektrische Maschine (10) nach Anspruch 3, **dadurch gekennzeichnet, dass** der Umfangsbogen (198) mehrere Knickstellen (222) aufweist, wobei einige dieser Knickstellen (222) an einer gleichen Umfangsposition wie Anschlusskontakte (201, 207, 213) angeordnet sind.

5. Elektrische Maschine (10) nach Anspruch 3 oder 4, **dadurch gekennzeichnet, dass** sich der Umfangsbogen (198) in Bezug zur Drehachse (26) über ein Winkelmaß erstreckt, das größer ist als ein Winkel, über den sich die Stromgleichrichter (147,150) insgesamt im Kühlkörper (53, 117) erstrecken.

6. Elektrische Maschine (10) nach einem der Ansprüche 3 bis 5, **dadurch gekennzeichnet, dass** der Umfangsbogen (198) an den Führungsstutzen (225) mittels einstückig angeformter Ösen (223) abgestützt ist.

## Claims

1. Electrical machine (10), in particular an alternator, comprising a rotor (20) which comprises an axis of rotation (26), a stator (16) consisting of a stator iron (17) and a stator winding (18) which is inserted therein and comprises conductor ends (228) which are connected to a rectifier device (139), a regulator (231) for regulating an excitation current and a cooling device in the rectifier device (139), comprising a first heat sink (53) which comprises at least one socket (66), at which a current rectifier (147) is accommodated, comprising a second heat sink (117), wherein the heat sink (117) comprises at least one socket (120), at which a current rectifier (150) is accommodated, comprising a connection unit (144), which connects the current rectifiers (147, 150) to form a bridge circuit, wherein the connection unit (144) comprises a plurality of integrally formed guiding bushes (225), in which conductor ends (228) of the stator winding (18) may be accommodated,
**characterized in that** a guiding bush (225) is shorter than other guiding bushes (225) and is disposed between the stator winding (18) and a regulator (231) of the electrical machine (10) in the direction of the axis of rotation (26), and the connection unit (144) comprises an arm (234), connecting the shorter guiding bush (225) at a free end of the arm (234) integrally with the other guiding bushes (225), wherein the arm (234) is arc-shaped and the arc-shaped arm (234) extends around a radially inner side of a mounting bush. verläuft.

2. Electrical machine (10) according to claim 1, **characterized in that** the shorter guiding bush (225), the arm (234) and the guiding bush (225) directly connected to the arm (234) are arranged outside the outer contour of the first heat sink (53).

3. Electrical machine (10) according to any one of the preceding claims, **characterized in that** a conductor in the form of a peripheral arc (198), which is arranged in sections in the direction of the axis of rotation (26) under an outer edge of at least one socket (66), starts from a terminal contact (195) directly assigned to the shorter guiding bush (225).

4. Electrical machine (10) according to claim 3, **characterized in that** the peripheral arc (198) has a plurality of buckles (222), wherein some of said buckles (222) are arranged at a same peripheral position as terminal contacts (201, 207, 213).

5. Electrical machine (10) according to claim 3 or 4, **characterized in that** the peripheral arc (198) extends with respect to the axis of rotation (26) over an angular dimension which is greater than an angle at which the current rectifiers (147, 150) extend overall in the heat sink (53, 117).

6. Electrical machine (10) according to any one of claims 3 to 5, **characterized in that** the peripheral arc (198) is supported on the guiding bushes (225) by means of integrally formed eyelets (223).

## Revendications

1. Machine électrique (10), en particulier un alternateur, ayant un rotor (20) ayant un axe de rotation (26), un stator (26) constitué d'un fer statorique (17) et d'un enroulement statorique (18) inséré dans celui-ci, lequel enroulement statorique comportant des extrémités de conducteur (228) interconnectées avec un dispositif redresseur (139), un régulateur (231) pour réguler un courant d'excitation et un dispositif de refroidissement dans le dispositif redresseur (139), ayant un premier dissipateur thermique (53) comportant au moins un logement (66) sur lequel un redresseur de courant (147) est reçu, ayant un second dissipateur thermique (117), dans lequel le dissipateur thermique (117) comporte au moins un logement (120) sur lequel un redresseur de courant (150) est reçu, et ayant une unité d'interconnexion (144) qui interconnecte les redresseurs de courant (147, 150) pour former un montage en pont, dans lequel l'unité d'interconnexion (144) comporte plusieurs embouts de guidage (225) formés d'un seul tenant, dans lesquels des extrémités de conducteur (228) de l'enroulement statorique (18) peuvent être reçues,
**caractérisée en ce qu'**un embout de guidage (225) est plus court que les autres embouts de guidage (225) et est agencé entre l'enroulement statorique (18) et un régulateur (231) de la machine électrique (10) en direction de l'axe de rotation (26), et l'unité d'interconnexion (144) comporte un bras (234) qui relie d'un seul tenant l'embout de guidage le plus court (225) à une extrémité libre du bras (234) avec l'autre embout de guidage (225), dans lequel le bras (234) s'étend en forme d'arc et le bras en forme d'arc (234) s'étend autour d'un embout de fixation sur un côté radialement intérieur.

2. Machine électrique (10) selon la revendication 1, **caractérisée en ce que** l'embout de guidage le plus court (225), le bras (234) et l'embout de guidage (225) directement relié au bras (234) sont agencés à l'extérieur du contour extérieur du premier dissipateur thermique (53).

3. Machine électrique (10) selon l'une des revendications précédentes, **caractérisée en ce qu'**un conducteur ayant la forme d'un arc circonférentiel (198) débute à partir d'un contact de connexion (195) directement associé à l'embout de guidage court (225), lequel conducteur étant agencé en partie sous un bord extérieur d'au moins un logement (66) en direction de l'axe de rotation (26).

4. Machine électrique (10) selon la revendication 3, **caractérisée en ce que** l'arc circonférentiel (198) comporte plusieurs points d'inflexion (222), dans laquelle certains de ces points d'inflexion (222) sont agencés sur la même position circonférentielle que les contacts de connexion (201, 207, 213).

5. Machine électrique (10) selon la revendication 3 ou 4, **caractérisée en ce que** l'arc circonférentiel (198) s'étend à un angle par rapport à l'axe de rotation (26) qui est plus grand qu'un angle total sur lequel les redresseurs de courant (147, 150) s'étendent dans les dissipateurs thermiques (53, 117).

6. Machine électrique (10) selon l'une des revendications 3 à 5, **caractérisée en ce que** l'arc circonférentiel (198) est supporté par l'embout de guidage (225) au moyen d'oreilles (223) formées d'un seul tenant.
